# EUROPEAN PATENT SPECIFICATION

(11) **EP 3 101 602 B1**
(45) Date of publication and mention of the grant of the patent: **12.09.2018**
(21) Application number: 16181194.8
(22) Date of filing: 07.05.2010
(51) Int. Cl.: G06Q 10/00, F24F 11/00, G06Q 30/02, G06Q 50/06, G06Q 50/08, G05B 15/02

(54) **BUILDING ENERGY CONSUMPTION ANALYSIS SYSTEM**
SYSTEM ZUR ANALYSE DES GEBÄUDEENERGIEVERBRAUCHS
SYSTÈME D'ANALYSE DE CONSOMMATION D'ÉNERGIE D'UN BÂTIMENT

(30) Priority: 08.05.2009 US 176790 P; 08.05.2009 US 176855 P
(43) Date of publication of application: 07.12.2016
(62) Divisional of application: 10772910.5
(73) Proprietor: Accenture Global Services Limited, Dublin 4 (IE)
(72) Inventor: HEDLEY, Jay, Arlington, VA Virginia 22209 (US); TSYPIN, Boris, Chicago, IL Illinois 60614 (US); RAGHU, Deepak, 122001 Gurgaon Haryana (IN)
(74) Representative: Müller-Boré & Partner Patentanwälte PartG mbB

(56) References cited:
- US-A1- 2007 063 059
- US-A1- 2007 143 045
- RAFFIO G ET AL: "Targeting residential energy assistance", 1 January 2007 (2007-01-01), PROCEEDINGS OF THE ENERGY SUSTAINABILITY CONFERENCE,, PAGE(S) 489 - 495, XP009174735, ISBN: 978-0-7918-4797-7 * pages 489-495 *
- DRURY B CRAWLEY ET AL: "EnergyPlus: A New-Generation Building Energy Simulation Program", PROCEEDINGS OF RENEWABLE AND ADVANCED ENERGY SYSTEMS FOR THE 21TH CENTURY, 4 November 1999 (1999-11-04), XP055091318,
- Tom Stroozas: "THE BALANCE POINT ISSUE "Simultaneous Heating & Cooling of Kitchens"", COOKING FOR PROFIT, 15 August 2006 (2006-08-15), XP055091320, Retrieved from the Internet: URL:http://www.gfen.com/pdf/articles/cooki nggas0806.pdf [retrieved on 2013-12-03]
- Ahmed Safwat: "CHAPTER IV Balance Point Temperature and the Evaluation of the Building's Thermal Performance Introduction", , 1 January 1999 (1999-01-01), XP055091120, Retrieved from the Internet: URL:http://www.cpas-egypt.com/pdf/Ahmed_Sa fwat/M.Sc/006%20%20%20%20%20CHAPTER4.pdf [retrieved on 2013-12-02]
- Mohammad Saad Al-Homoud: "Computer-aided building energy analysis techniques", Building and Environment, 1 January 2001 (2001-01-01), pages 421-433, XP055177708, DOI: 10.1016/S0360-1323(00)00026-3 Retrieved from the Internet: URL:http://www.sciencedirect.com/science/a rticle/pii/S0360132300000263

## Description

### BACKGROUND OF THE INVENTION

### Technical Field.

This disclosure relates to obtaining and analyzing building energy data. This disclosure also relates to engaging in an energy analysis to determine analysis results, and optionally responsively controlling building systems, such as lighting, heating, air-conditioning, and other energy consuming systems.

### Related Art.

Energy consumption, monitoring, and management are crucial components of sustainable, eco-friendly infrastructures now and into the future. A need exists to provide energy data focused analysis results to accurately determine building energy expenditures, performance and costs.
Document RAFFIO G ET AL: "Targeting residential energy assistance", 1 January 2007 (2007-01-01), PROCEEDINGS OF THE ENERGY SUSTAINABILITY CONFERENCE,, PAGE(S) 489 - 495, XP009174735, ISBN: 978-0-7918-4797-7 * pages 489-495 relates to a four-step method to analyze the utility bills and weather data from multiple residences to target buildings for specific energy conservation retrofits. The method is also useful for focusing energy assessments on the most promising opportunities. The first step of the method is to create a three-parameter changepoint regression model of energy use versus weather for each building and fuel type. The three model parameters represent weather independent energy use, the building heating or cooling coefficient and the building balance-point temperature. The second step is to drive the models using typical TMY2 weather data to determine Normalized Annual Consumption (NAC) for each fuel type. The third step is to create a sliding NAC with each set of 12 sequential months of utility data. The final step is to benchmark the NACs and coefficients of multiple buildings to identify average, best and worst energy performers, and how the performance of each building has changed over time.

### SUMMARY

The present invention relates to computer-implemented methods, energy analysis systems and a computer program product as claimed in the independent claims. Preferred embodiments are defined in the dependent claims. According to an embodiment, an energy analysis system provides energy analysis results. The energy analysis system may include a processor, a communication interface coupled to the processor, and a memory coupled to the processor. The memory may include energy analysis logic that, when executed by the processor, causes an
energy analysis system to carry out the method according to claim 1 including: establishing a data connection from a network operations center through an energy data connectivity interface to an energy data source, obtaining energy data at the network operations center through the data connection to the energy data source, and performing an energy analysis in the network operations center on the energy data to produce an analysis result.

The energy analysis may include: determining control building data within the energy data, determining user-defined data within the energy data, and determining, as the analysis result, an exception rank by comparing the control building data and the user-defined data. The exception rank may identify specific data in the user defined data for further review.

The energy analysis includes: determining a balance point set from the energy data as the analysis result. The balance point set includes both a heating balance point and a cooling balance point. The system may display any analysis result in a user interface on a display.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The systems and methods may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 shows a system for building energy analysis.
Figure 2 shows an operational diagram.
Figure 3 shows a foundation diagram.
Figure 4 shows a benefit diagram.
Figure 5 shows an energy and savings impact analysis.
Figure 6 shows an end-to-end analysis process that the system may implement.
Figure 7 shows findings that the system may generate from its analysis.
Figure 8 shows example baseline reports 800 that the system may generate.
Figure 9 shows examples of automated analysis of intelligent alarms and detection of maintenance activities.
Figure 10 shows an example of a development framework for the system.
Figure 11 shows a system architecture for building energy analysis.
Figure 12 shows a phased implementation plan for the system.
Figure 13 shows a threshold-based alerting process that the system may implement.
Figure 14 shows a process flowchart.
Figure 15 shows business rules, controls and technology (including data configuration) to provide a secure environment.
Figure 16 shows a program management methodology.
Figure 17 shows a scalability scenario.
Figure 18 shows dashboard screenshots for reporting screens that the system may generate.
Figure 19 shows a dashboard screenshot for an analytics reporting screen that the system may generate.
Figure 20 shows a dashboard screenshot for a trend reporting screen that the system may generate.
Figure 21 shows a dashboard screenshot for a monitoring reporting screen of historical energy comparison that the system may generate.
Figure 22 shows a dashboard screenshot for a monitoring reporting screen of actual energy usage versus budged amount that the system may generate.
Figure 23 shows a dashboard screenshot for a monitoring reporting screen of Interactive Automated Fault Detection and Diagnosis that the system may generate.
Figure 24 shows a sample reporting format for measuring and optimizing comfort, efficiency, and operations within each building space, including reporting on operations of building equipment and systems, specifically regarding Analysis Focused on Equipment Performance.
Figure 25 shows an example of a particular machine for implementing the system for building energy analysis.
Figure 26 shows balance point determination logic.
Figure 27 shows a kilowatt hour consumption and exception ranks analysis.
Figure 28 shows comparison logic for determining exception ranks.
Figure 29 shows alert logic for determining building level alerts.

### DETAILED DESCRIPTION

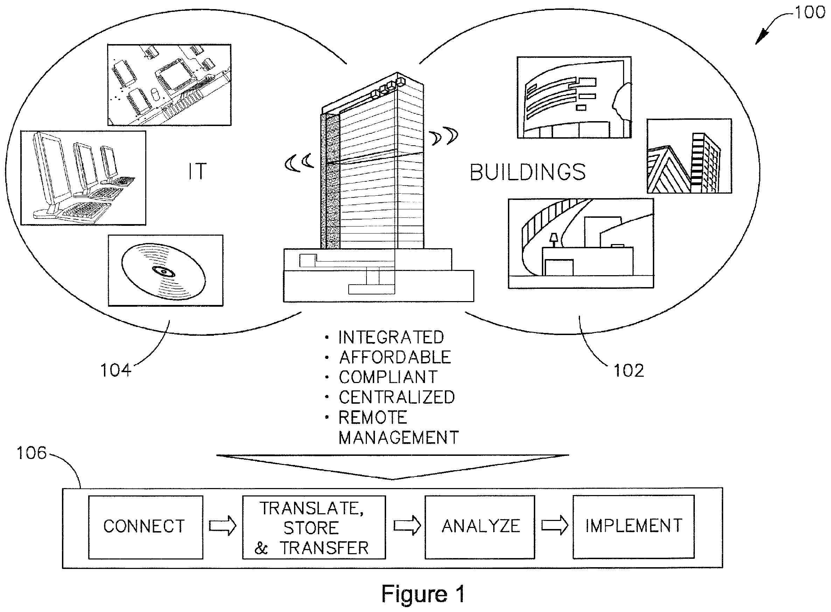

Figure 1 shows an overview of a system 100 for building energy analysis. The system 100 converges buildings systems 102 with Information Technology (IT) 104 to facilitate a new level of data analysis and continuous control 106. The system 100 gathers data and indicators for fact-based decision-making and sound environmental management. The system 100 drives continuous improvement and facilitates managers to mark progress and reach productivity goals. As IT converges with building technologies, the system 100 permits ongoing system optimization, making it more feasible and more effective for companies to sustain performance of their existing real estate portfolio. In some cases, the system may reduce building operating costs by 20 - 30% or more, yielding an increase in building value of $10 - $20 / sqft or more. The system 100 focuses on providing data focused services to optimize building operations and costs.

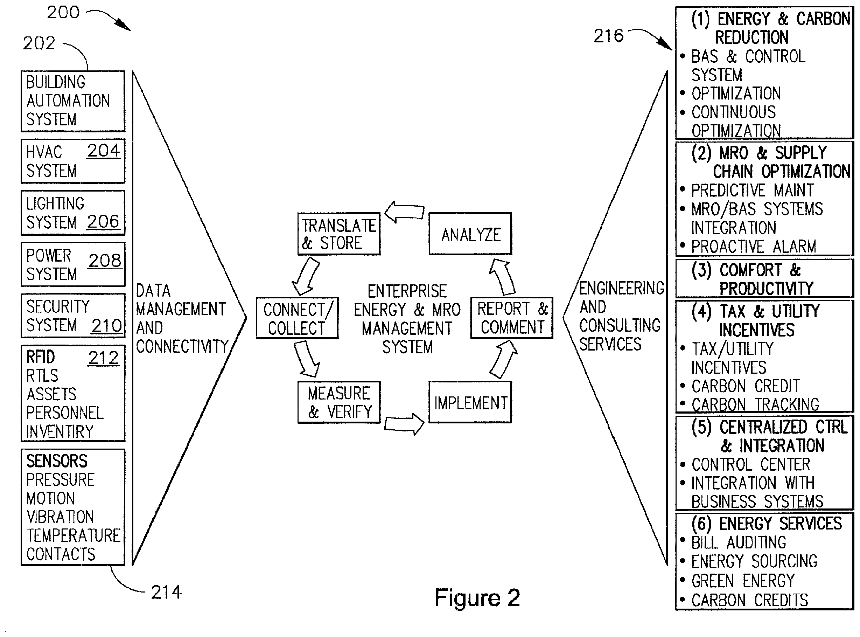

The system 100 may be implemented with a wide range of technologies. The technologies may span data capture and analysis over a wide range of building systems, as shown in the operational diagram 200 in Figure 2. Such building systems include automation systems 202, high voltage air conditioning (HVAC) systems 204, lighting system 206, power systems 208, security systems 210, radio frequency identification systems (e.g., to track assets, personnel, and inventory) 212, and sensor system 214 (such as pressure, motion, vibration, temperature, and contact sensors). Energy and consulting services 216 may provide input into the system 100 as well. Such technologies are available from, as examples, Richards Zeta(TM) company, Interval Data Systems(TM) company, Facility Solutions Group(TM) company, Sensus(TM) company, Constellation NewEnergy(TM) company, and other providers. Accordingly, the system 100 may implement Installation of equipment and on the ground repair & maintenance services, Integration, Configuration, Protocol Translation, Portal for Remote Building Automation Systems (BAS) Programming & Optimization, Automated Fault Detection Diagnostics (AFDD), Maintenance Optimization, BAS Analysis, Baseline Scorecard (BOSS), and System Optimization, and other features.

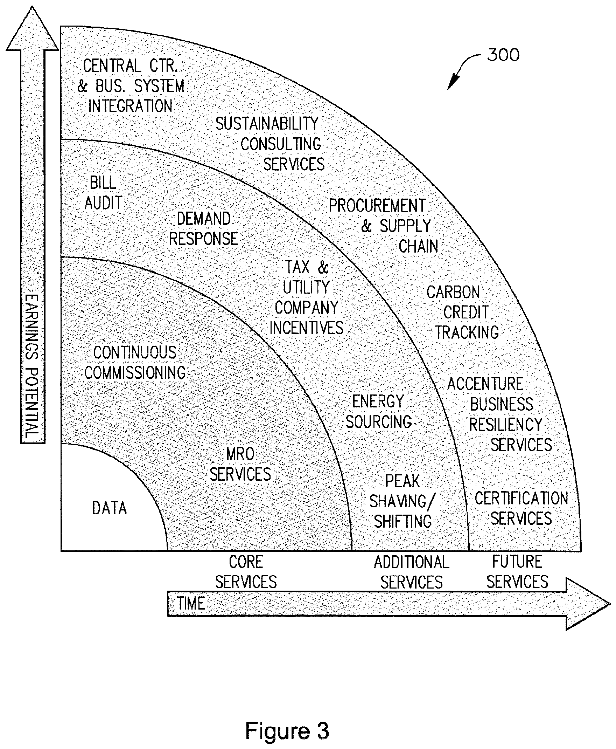

Figure 3 shows a foundation diagram 300 based on the system 100 data centric approach that helps deliver additional services in the future. The system 100 may focus on data services and deliver benefits based on information from the building sensor and control infrastructure. Accessing the operational data and using it to control system operations can facilitate significant additional savings and revenue-generating opportunities.

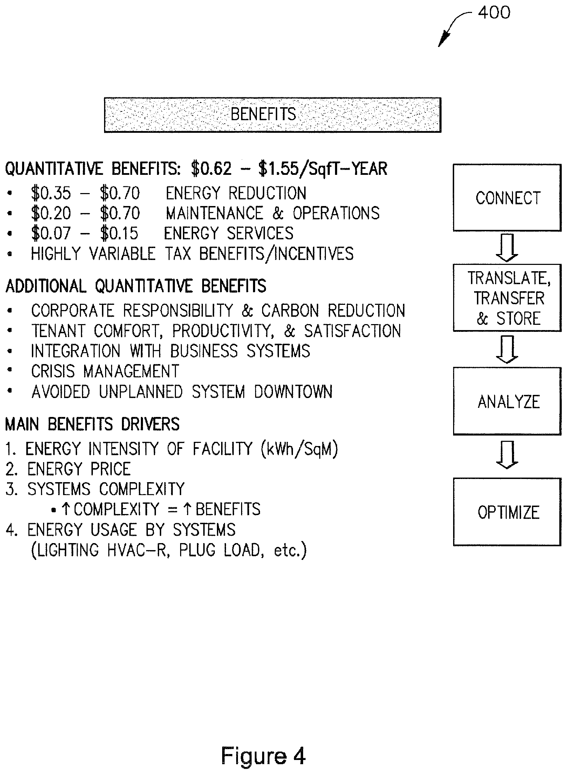

Figure 4 shows a benefit diagram 400. The benefit diagram 400 illustrates qualitative and quantitative benefits delivered by the system 100. The benefit diagram 400 also illustrates several example main benefits drivers.

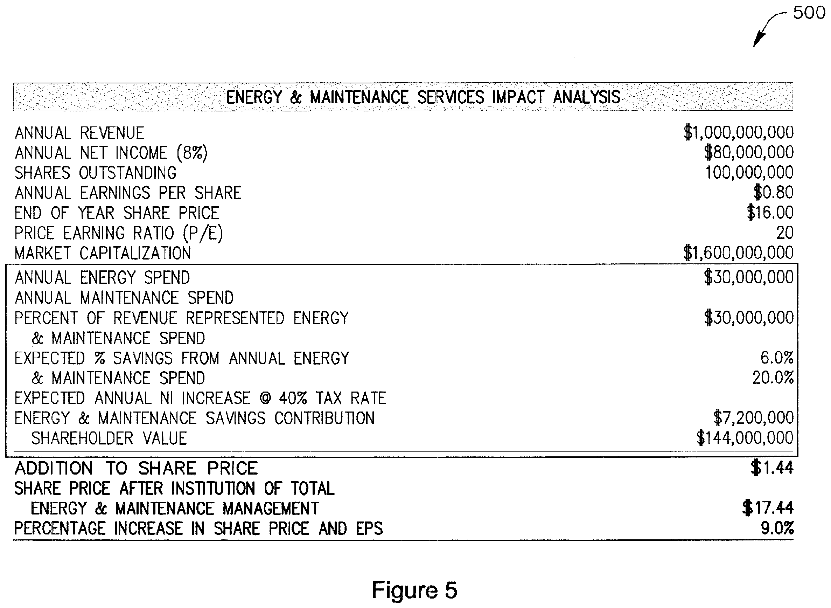

Figure 5 shows an energy and savings impact analysis 500. The analysis 500 explains an example scenario under which company share price is increased due to energy saving which the system 100 may help achieve.

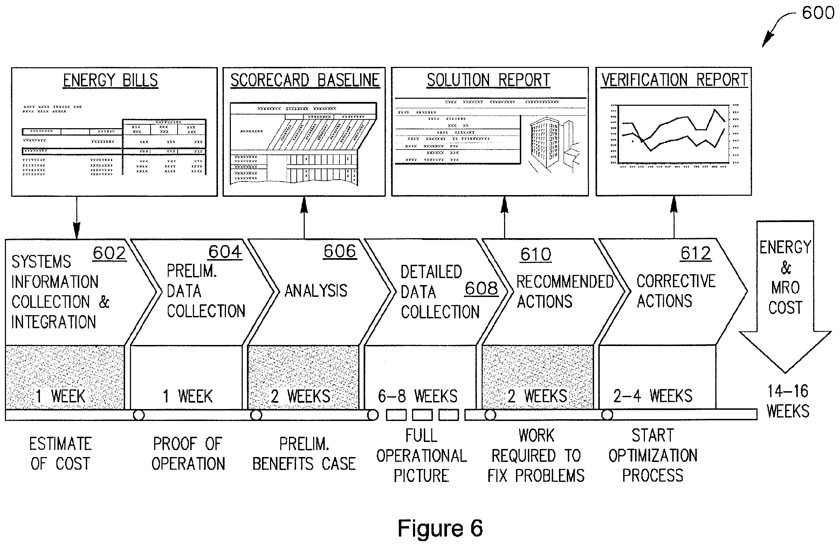

Figure 6 shows an end-to-end analysis process 600 that the system 100 may implement. The analysis process 600 may, for example, include full optimization and monitoring over a multi-year period. In one implementation, the process 600 may include systems information collection and integration (602) (e.g., using information from energy bills or other documents), preliminary data collection (604), analysis (606) (e.g., to generate scorecards and baseline reports), detailed data collection (608), and generate recommended actions (610) (e.g., in the form of a solutions report), and corrective actions (612) (e.g., in the form of a verification report). Beyond initial installation and analysis, the system 100 may continue to be optimized to provide continuous monitoring for each integrated facility, with options for further integration of enterprise systems. The system 100 may be implemented in or under a gain sharing agreement that facilitates the system 100 implementer or provider to share both the up-front cost and the continuing benefits. This establishes a long-term relationship that leads to continuously increasing benefits.

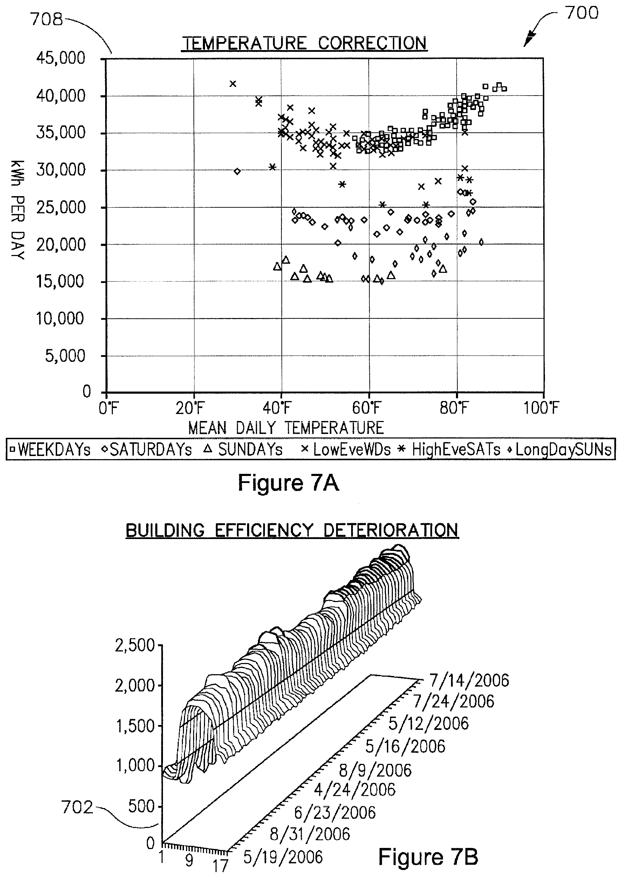

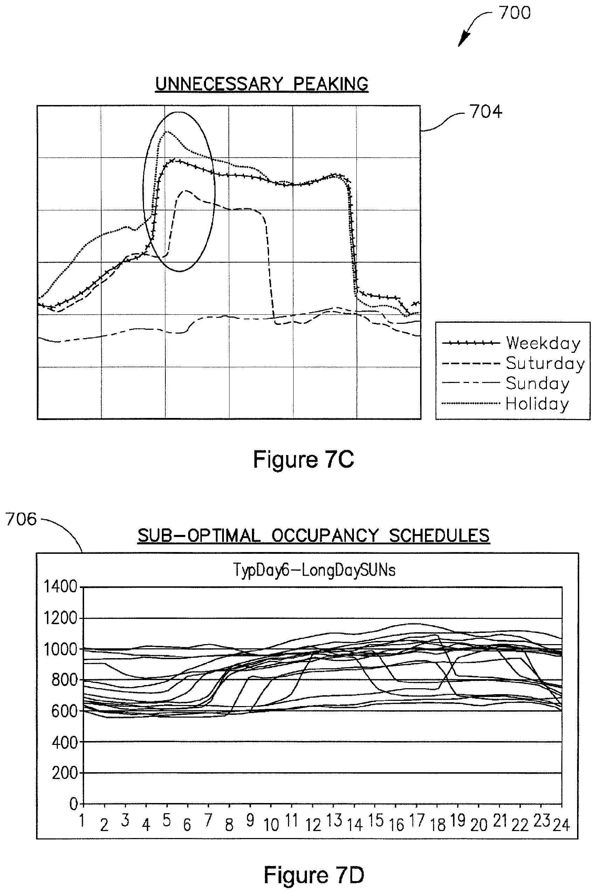

For example (602) and / or (604) may include an analysis of the historical billing information and interval data, such as that showing building power usage measured every 5 to 15 minutes. Figure 7 shows findings 700 that the system 100 may generate from the analysis. The findings 700 may include building efficiency deterioration 702, unnecessary peaking 704, sub-optimal occupancy schedules 706, and temperature correlations 708.

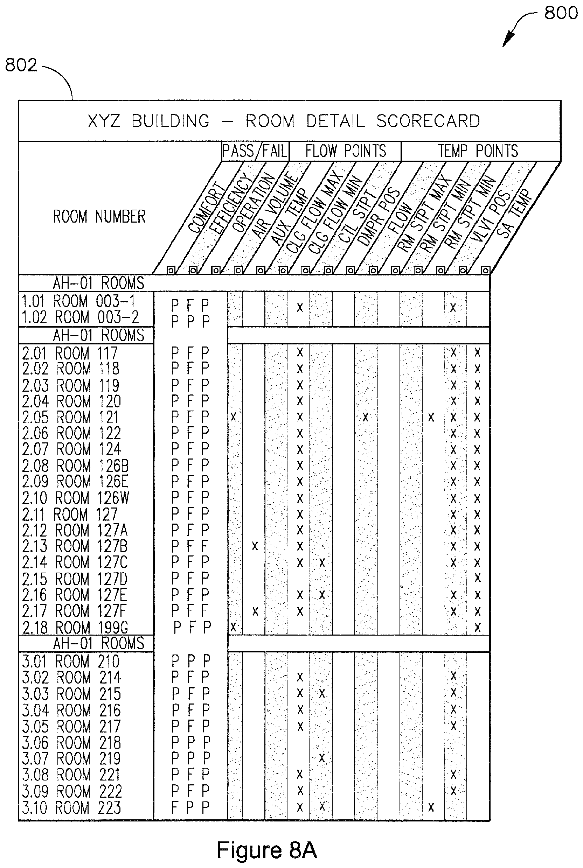

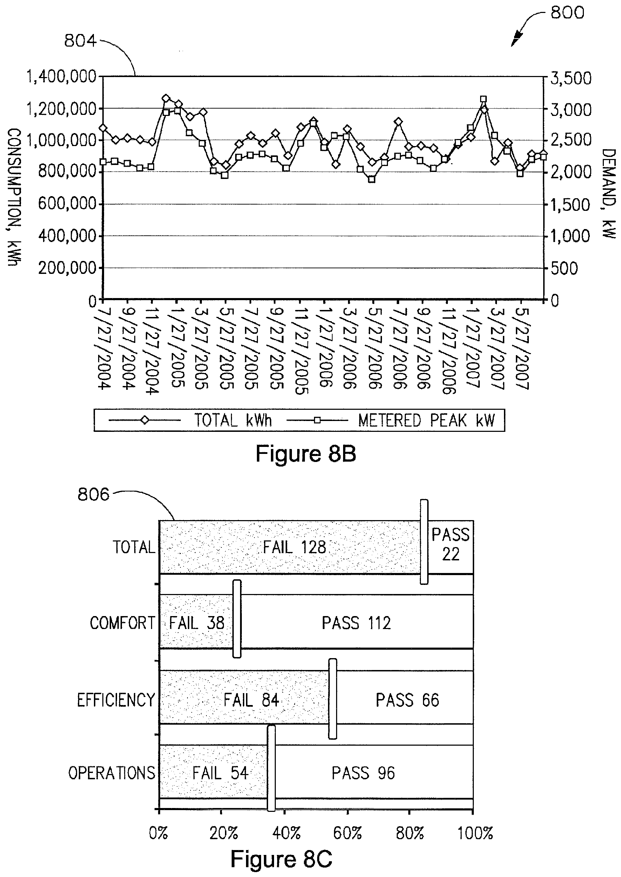

As a further example, (602) and / or (604) may further include setting a baseline of building performance. In other words, the system 100, based for example on access to Building Management System (BMS) information, may create a baseline performance so that the system 100 shows a room by room picture before and after picture of energy consumption. Figure 8 shows example baseline reports 800 that the system 100 may generate, including a room detail scorecard 802, consumption / demand graph 804, a top level scorecard baseline (e.g., comfort / efficient / operations) charts 806, or other baseline reports.

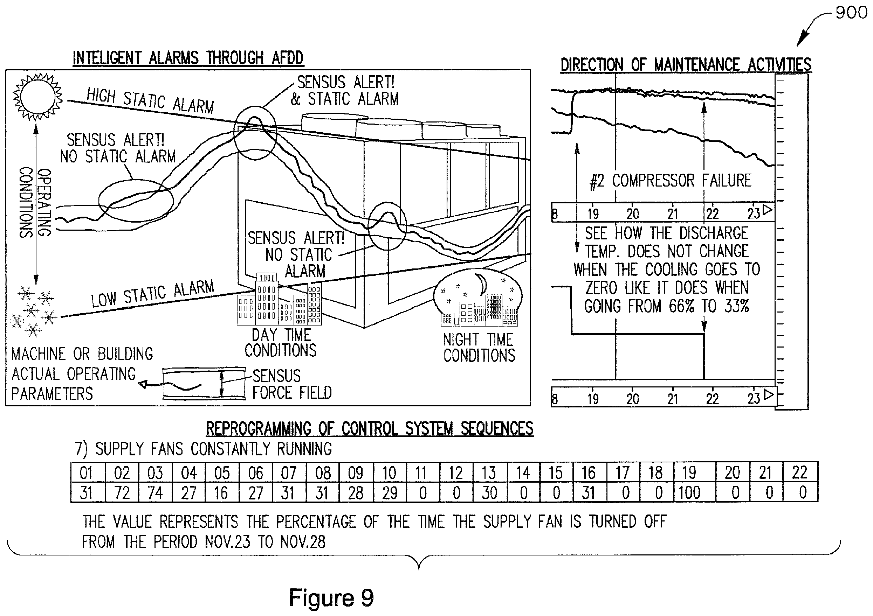

Analysis (606) may include programming and maintenance activities to improve system performance. This may include continuous, real-time, and/or automated analysis of systems operation. Figure 9 shows examples 900 of automated analysis of intelligent alarms and detection of maintenance activities.

The inputs to the system 100, concerning Data Collection - Analytics - Fault Detection - Continuous Control, and other aspects may include:
Utility bills and interval data
Building blueprints and BAS design diagrams
Building control system information
Contact information for controls vendor and building engineers
Access to facility (e.g., physical or remote access).

The system 100 may combine strategies to improve the efficiency of a building's energy and maintenance by delivering an energy framework to support new solutions for the strategic new market of high performing buildings and energy management. The system 100 leverages the development of a robust energy management framework, through the connectivity and data management of buildings worldwide and associated implementation technologies. Such technologies may include Outlook, Office Communicator, Sharepoint, and other technologies for use in the energy framework and Building Management Systems. The system 100 and system implementation may also align with the leading energy management companies (e.g., Sensus MI, ION EEM), improving data collection, and delivering advanced applications managed, as examples, through Azure and Microsoft's Cloud architecture. The system 100 may further leverage Microsoft (TM) Dynamics to facilitate integration between Utilities and Owners of Building Data, generating dashboards of KPIs, SMART city, SMART grid, carbon tracking, energy consumption, SMART Grid integration, INDE, demand response, and other systems.

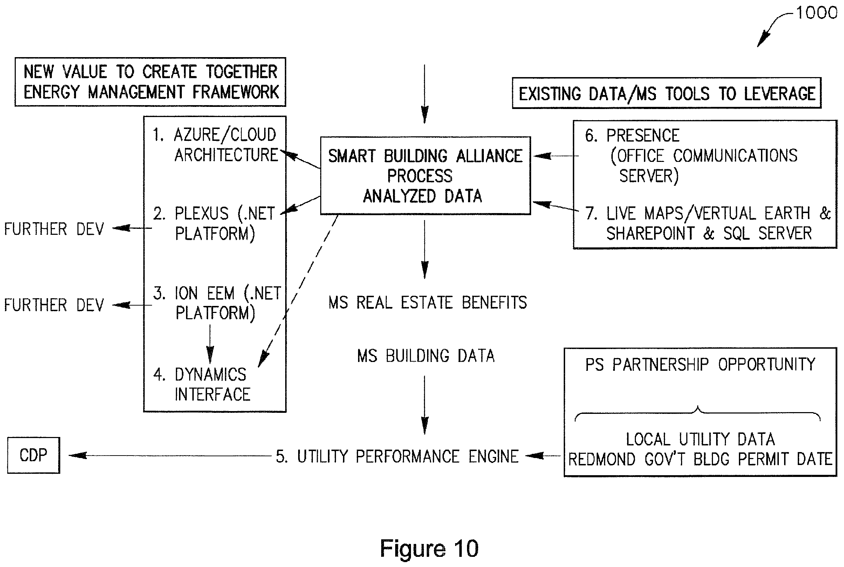

Figure 10 shows an example of a development framework 1000 for the system 100. The following may be undertaken with regard to developing the system 100:
Create the strategy and roadmap for co-developing the Energy Management Framework (EMF).

Internally pilot the SMART Buildings platform to be the proving grounds of the EMF and serve as the credential for the EMF and its premier energy management application.

Co-develop the EMF leveraging .NET, SQL Server, Dynamics, Virtual Earth, Azure, and Sharepoint to lead the industry in defining a unique platform to develop, deployed, and manage energy related applications.

Deploy the EMF using, e.g., Azure's cloud services OS to manage advanced engineering calculations and data management requirements.

Investigate leading technologies for building system connectivity and integration (i.e. Plexus) and help scale additional drivers, scalability, and security with a platform for any company to leverage.

Further define the strategy of the EMF to leverage additional MSFT technologies as the market develops (e.g., Office Communicator, carbon tracking with Sharepoint, Outlook integration with BAS, as examples).

Integrate into existing Energy systems and technologies deployed at MSFT (i.e. ION/EEM & MRO).

Align with utility companies to leverage Dynamics as part of the world's energy / carbon dashboards (SMART Grid, CCF Project 2 degrees, INDE, demand response programs, carbon tracking/management/trading, Utility Performance Engine, SMART City).

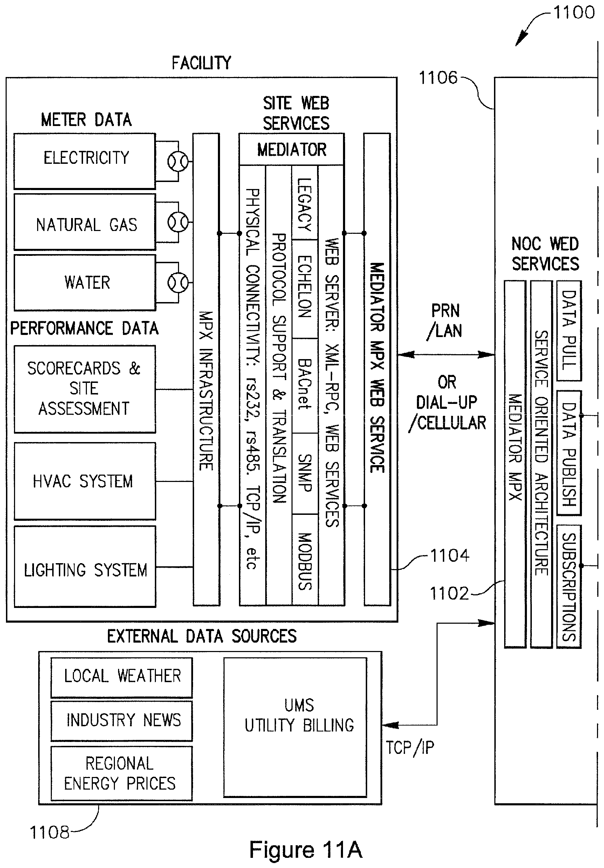

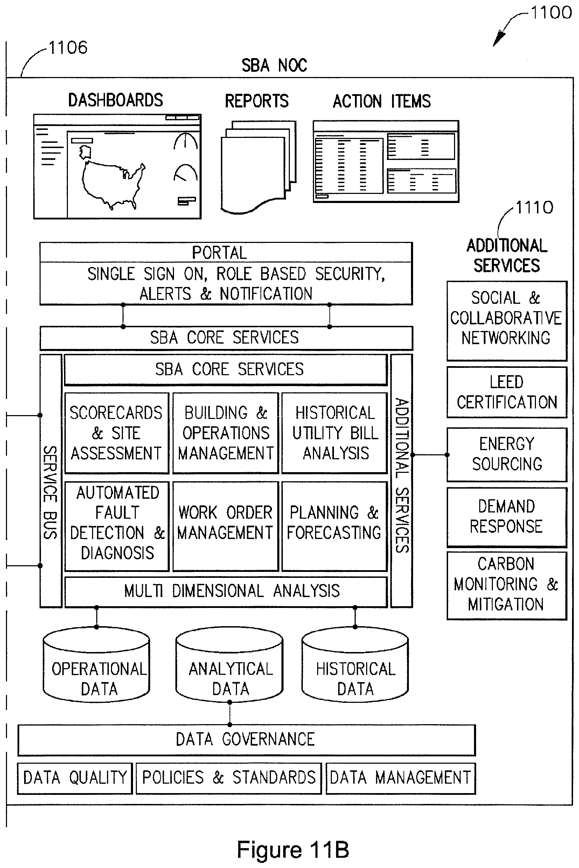

Figure 11 shows an architecture 1100 for the system 100. The system 100 may provide an energy data focused approach based on data management and analytics of existing systems and equipment versus a capital intensive approach. The system 100 may connect and integrate in a hardware and software agnostic way with multiple vendor solutions & protocols (e.g., provided by Trane, Siemens, Johnson Control, Honeywell, and others). The system 100 may provide an open IP-based two way (read/write) infrastructure connecting one or more buildings in a portfolio to a network operations center with web-based control capabilities. The system may, as examples:
1) deliver continuous re-commissioning through setpoint control and schedule optimization;
2) delivers 24 hours a day x 7 days a week (24x7) automated equipment fault detection and diagnosis down to one-minute intervals and prioritized by user defined options: rank, severity, cost of fault, location, and others;
3) establish operational guidelines for setpoints and schedules across all equipment and BAS data for a portfolio of buildings, managed through a central command center;
4) deliver measurable calculated monthly results tracking energy reductions: (10% min in year 1);
5) integrate to existing Maintenance Repair & Operations applications and Energy Management systems;
6) include the ability to install, connect, and integrate additional meters, sub-meters, sensors into the common platform as required;
7) be supported by world class project management, change management, and training organization; and
8) be delivered on a scalable architecture to easily and securely scale with the client's needs.

With reference still to Figure 11, the architecture 1000 includes:
At the building (e.g., company facility): a mediator 1102 (e.g., a Richards-Zeta Mediator 2500) that provides a connectivity interface for connecting to one or more meters and sub-systems in a facility. The meters may include utility meters as well as any Building Automation System (BAS), lighting or security control system, or other systems.

Site Web Services 1104: The mediator 1102 communicates the data it collects to the System Network Operations Center (NOC) 1106. The mediator 1102 may received the energy data from web services 1104 installed onsite at any desired facilities. In other words, the web services 1104 may establish a data connection to the mediator 1102 and send building energy data to the mediator 1102. However, any other type of connectivity interface as a data transmission mechanism may be employed to communicate data to the mediator 1102, including file transfer, message passing (whether web services based or not), shared memories, or other data transfer mechanisms.

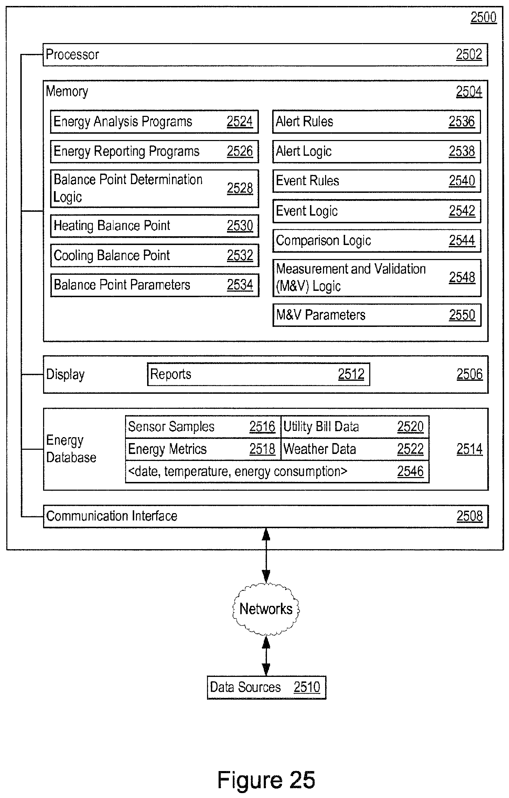

System NOC 1106: The NOC 1106 may use a Service-Oriented Architecture (SOA) to aggregate data across all facilities. Its core services provide analytics and other data management services to the user via a Web-based portal, or Rich Internet Application (RIA). Examples of the specific implementation of the NOC 1106 and the analysis results that the NOC 1106 may provide are discussed below, and in particular with regard to Figures 25-28.

External Data sources 1108: In addition, the NOC collects relevant data from external data sources, such as the National Weather Service, and may also obtain reports on regional energy prices and 3rd-party or company systems.

Additional Services 1110: Because of the versatility of the system 100 infrastructure, additional services may be layered onto the core. The mediator 1102 has 2-way communication that supports Demand Response programs. Additional services also include a collaborative social network in which company facility managers and operators can share information on operations. They may also drive LEED certification of company buildings, perform carbon tracking and mitigation services, and others.

The system 100 energy management data services offer a unique approach at delivering a comprehensive view of a facility's operations. The system 100 may implement continuous optimized control through real time/interval data acquisition and analysis of all relevant facility data. The System Enterprise Energy Management System (EEMS) may include or involve: (1) a physical site assessment, (2) historical utility bill analysis, (3) utility meter interval data analysis, (4) holistic facility controls analysis, (5) real-time automated equipment fault detection and (6) energy sourcing and demand-response energy management. From these inputs the System energy management system generates insight in the form of reports, dashboards, and alerts that provide actionable information that leads to realized energy reduction and cost savings.

The system 100 may begin with a detailed audit of the facility premises. Facilities are surveyed to fully document machine type, layout and building structure, operating hours, building automation capabilities and potential need for additional metering and sub-metering. Specific care is given to observe the unique properties of each building. The walkthrough provides critical baseline information on the premises' layout, engineering, and operational health.

Historical utility bill analysis is the next phase of the system 100 implementation. The historical utility bill analysis provides an in-depth look at utility bill trends over time, including general or seasonal trends energy trends. This information is crucial to understanding the way a building has been operating so energy saving opportunities can be recognized. It also provides a benchmark against which later energy saving measures can be compared. Additionally, it is common to find billing errors during this phase, which are immediate opportunities for savings.

Meter interval data analysis is a third phase of the system 100 solution. To obtain data about energy consumption, an energy data mediator 1102 is installed and connected to on-site utility meters. The mediator 1102 is used to collect utility data from each of the meters and sub-meters in a building, including the building automation system. This data is then cleansed and collected to get a consumption breakdown by building, section or floor and can be viewed in the robust EEMS tool. Much like the billing analysis, this information is used to spot trends and benchmark future energy saving strategies.

A holistic picture of the building emerges during the facility controls analysis, where the system 100 team analyzes and report on the "design intent" of the building controls versus the current performance of the building. Here, the mediator 1102 extracts data from each building system and piece of equipment in the building. This data is tracked over time to observe subtle features in the way the equipment works and the building operates as a whole. As months and even years of data are collected, macro-scale trends related to seasonality, occupancy, and utilization rates all emerge. These trends help contextualize power usage and other metrics, allowing for even greater insight into building operations and further opportunities for savings.

The system 100 solution utilizes data captured by the mediator 1102 on a per-minute basis. This fine level of granularity facilitates the System solution to identify real-time trends and problems which were previously undetectable. Additionally, it provides real-time actionable reporting that prioritizes problems and suggests a tangible cost to their continued neglect or systematic inefficiencies. Automatic fault detection begins with as little as three weeks of collected data, and continues for the life of the System contract.

The mediator 1102 provides for bi-directional (read/write) capability with any integrated system. This facilitates for 24/7 continuous optimized control of the systems connected to it. The mediator 1102 has an intelligence layer allowing for full closed loop advanced math and logic between any of the previously disparate systems. The mediator 1102 also sends and consumes Web services. An example Web service would be an Automated Demand Response (ADR) notice and pricing level signal from Constellation New Energy (CNE) triggering the mediator 1102 on board logic and control to automatically shed electrical loads by turning off non essential lighting and changing set points on chilled water and HVAC zones.

Thus, the system 100 and NOC 1106 may establish a data connection from the network operations center 1106 through an energy data mediator 1102 to an energy data source 1104. They may then obtain energy data at the network operations center 1106 through the data connection to the energy data source 1104. The system 100 and NOC 1106 may also perform an energy analysis in the network operations center 1106 on the energy data to produce an analysis result, as described below, for example in connection with Figures 25-28.

Another component of the system 100 solution is the strategic energy sourcing and demand-response energy planning. Energy sourcing experts will help each facility to find the lowest cost and/or greenest power available in that market. Green options include offsetting a facility's energy requirements with renewable sources of energy, including wind, small hydroelectric, landfill gas, and biomass, providing an electricity choice that can directly support the building of new renewable power plants. The system demand response solution is an additional service that can provide direct revenue to a facility. Facilities sign up with the regional ISO's demand response program and receive annual payment for participation, in exchange for agreeing to shed load an agreed number of times. System helps to engineer a demand response solution that minimizes impact on facility operations. Both energy sourcing and demand response are administered to meet regional regulations while delivering value to the customer.

The system 100 solution achieves cost savings on several fronts. Most notably, savings are realized through reductions in total energy consumption and decreases in both scheduled and unscheduled maintenance.

Energy savings occur when building control sequences are optimized to run in the most economic fashion. Wasteful situations like running an unoccupied building at/near full capacity are easily eliminated. More subtle improvements can be identified through system 100 analytic solutions which identify mis-configured and even machines needing repairs. The system 100 solution's automatic fault detection and diagnosis tool not only provides a clear understanding of a problem, but suggests a financial consequence with letting the problem go unresolved. The EEMS' reporting gives a level of detail which requires less man-hours to investigate - freeing the facility team to address the most promising energy saving opportunities rather than simply assessing the state of the building.

Efficient building operations leads to decreases in scheduled maintenance costs. This increases the lifespan of the equipment and decreasing the replacement frequency, thus allowing a facility to optimize its operations with the equipment it has, rather than recommending new capital purchases. Unscheduled maintenance costs also decrease based on detection of inefficient machines. Some machines may achieve the desired end result (say, cooling a room to 72 degrees), but do so in a highly inefficient manner which cuts its lifespan by as much as half. As an example, a machine which is operating in both heating and cooling mode may be able to achieve a final temperature of 72 degrees by mixing hot and cold air. However, this is highly inefficient and could cause the machine to break unexpectedly.

Altogether, the system 100 solution provides direct, continuous, and reliable energy savings without requiring major capital purchases. The system 100 solution helps a facility makes the best use of the equipment it already has, by optimizing energy consumption and maximizing the lifespan of the equipment. Through its data-driven solution, the system 100 provides an approach that is unique in the marketplace for bringing an information-technology-driven business intelligence capability to the world of facility energy management.

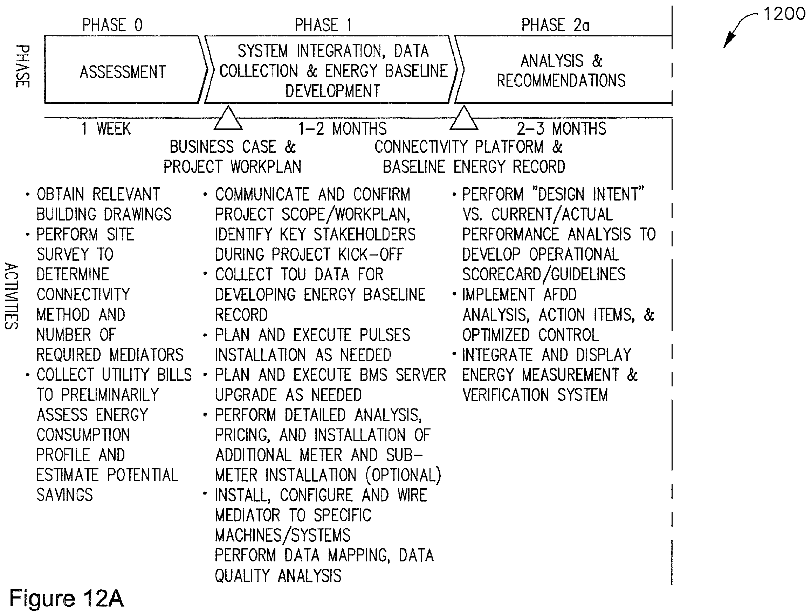

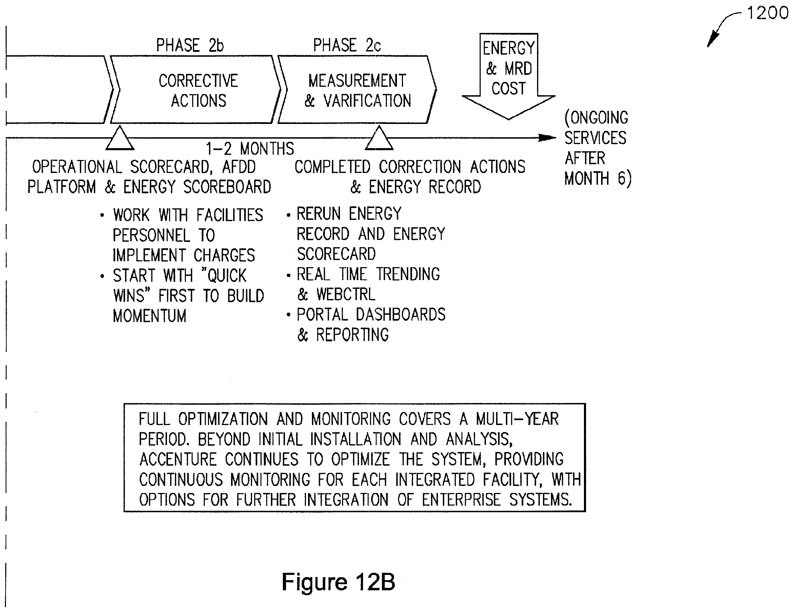

Figure 12 shows a phased implementation plan 1200 for the system 100:

### 1. EEMS Database Repository

### Initial Setup

The mediator 1102 may be installed directly into the existing metering infrastructure to retrieve available metering data. The system configuration may occur remotely once there is established network connectivity. The EEMS database may be configured while installing the mediator 1102. Configuration may include commissioning each meter and facility within the database and cleansing, validating and normalizing the data points retrieved.

### Utility/Energy Consumption Data Retrieval from Meter/Sub-meter data

The system 100 will support data retrieval from meters and sub-meters through the mediator 1102, which may serve as a unifying platform for intelligent and connected buildings. The mediator 1102 also can connect to building automation and other building sub-systems, including lighting and security, via its Multi-Protocol Exchange (MPX) platform and framework.

### Key Performance Indicators Tracking

The system 100 tracks data points such as temperatures, flow rates and weather conditions as interval data points. The system 100 will store this information with a timestamp, point value and data-quality rating for each collected point/interval. The system 100 can then normalize time values into any interval the user desires to align points for output/reporting.

Most key performance indicators (KPIs) are the result of calculations based on these data values. The system 100 can calculate ongoing consumption and operating cost rates (e.g., $/hour) at the desired data collection rate (e.g., every 15 minutes) or via KPIs normalized by size (e.g., Btu/square foot). In addition to cost and consumption-based KPIs, comfort and indoor air quality (IAQ) indicators are available to show how well the system meets thermal comfort and ventilation requirements.

### Utility/Equipment Data Retrieval from company Enterprise Applications and External Resources

Through systems integration, the system 100 may retrieve data from existing company enterprise applications or external resources. The system's open, service-oriented architecture (SOA) can interface with existing company enterprise systems to deliver a fully-integrated energy and maintenance management solution.

The specifics of the communications link will depend on the system's details. The system EEMS will be able to read and extract data from SQL-compliant databases (e.g., OracleDB, SQL Server, MySQL), subscribe to a Web services data feed, or build a custom interface, as required. The EEMS may be linked to or import data from existing databases and Excel files and process other flat files in formats specified by the utility company. These may be continuous feeds or regularly scheduled updates (e.g., daily, monthly).

### Data Transfer and Uploads into the EEMS Data Repository

The system solution collects and transfers data via the mediator 1102. The mediator 1102 integrates, collects, logs and exports information into the EEMS data repository either through the internet via a routed network (e.g., the postal system routed network PRN) or by using a built-in cellular wireless link. Data is aggregated locally on the mediator 1102, and then transferred at specified frequencies over the active communication link. The EEMS receives the data via Web service and processes and loads it into the database in real-time. Thus, the system EEMS supports real-time access to facility metering data via the mediator 1102 HTML and XML (AJAX) Web page dashboards and Graphical User Interfaces (GUI) and up to one-minute to the EEMS data exported Network Operations Center.

### Data Normalization (Weather and Time Series/Interval)

The database architecture may be based on the need to manage interval data and normalize it on a time basis from many different resources (metering systems, building automation systems, weather, eFMS, UMS etc). The database may manage data of any frequency, whether it will be in set intervals or collected on a change-of-value (COV) basis. The EEMS will align data from different sources with a uniform time coding system so that values can be normalized to whatever interval the EEMS user chooses to display. In agreement with industry proven practices, the system will perform weather normalization as part of the Baseline Energy Record and various tracking and analysis reports included in system EEMS.

### Calculation of Key Values for Interpretation of Consumption and Cost Information

The system EEMS may include a calculation engine that facilitates performance of nearly any type of calculation at 15-minute intervals. Example calculations include normalized usage and cost parameters, such as Btu/square foot, to facilitate comparisons across facilities. The EEMS will derive the cost data from integration with a bill consolidation platform that provides indices such as cost/square foot or consumption/hour.

### 2. Data Collection and Connectivity

### Data Collection and Connectivity Requirements

### Data Collection/Transfer With and Without Connectivity to the network

The system solution will accommodate any company's connectivity requirements:
In cases where a routed network connectivity is not available, the mediator 1102 will use an on-board dial-in/dial-out modem for communicating to a remote monitoring system via wireless cellular or other connection mechanism.

In cases where routed network connectivity is available, the mediator 1102 will not require any additional network infrastructure beyond a connection to the network. From the perspective of an IT manager, no difference exists between a mediator 1102 and normal Web traffic.

The system solution will confirm that data security through Linux-based security features that include packet filtering firewalls, secure shell, SSL, IPSec and data logging. The mediator 1102 firewall uses the Netfilter packet-filtering subsystem built into the Linux operating system. It will support the secure shell protocol, which will provide strong authentication and secure communications over insecure networks such as the Internet. SSL will facilitate encrypted transmission of data between Web browsers and Web servers. The IPSec protocol will provide security in network-to-network connections. It will provide access control, data-integrity, authentication and confidentiality for secure private communication across insecure public networks such as the Internet. Data logging will record a variety of connection attempts and authentication requests to determine if there is an attempt to access information without authorization.

### Communication Data Rates, Speed and Volume

The system solution will have little impact on network traffic. The mediator 1102 only transmits the value associated with a data point when that value changed. This will reduce strain on the network.

For connections to existing building automation systems, data rates above the controller may be 100mb TCP/IP, while data rates below the controller will increase all possible throughputs from the legacy systems. Data rates below the controller will depend on the actual installed legacy systems. The mediator 1102 will translate these disparate systems' physical layers, communications protocols and data-network speeds (baud rates) into a high speed IT standards object model.

### Data Collection Requirements

### List of Data Points Collected by system EEMS for Each Facility

The system EEMS may collect a wide range of data points to perform operational analysis, corrections, and measurement and verification (M&V). The system will attempt to collect every existing networked data point in a facility.

The following list represents a subset of additional operational points the EEMS collects:

### Space temperature setpoints (min/max, occupied/unoccupied)

### Space/zone occupancy status

Variable air volume system (VAV) operational data such as supply air temperature, reheat valve position, heating mode, reheat valve type, supply air setpoints (min/max, heating/cooling, occupied/unoccupied), air flow, damper position, etc.

Variable frequency drive (VFD) operational data such as speed, fan optimal start/stop, warm-up, etc.

Air handler units (AHU) supply/return/mixed air temperature, outside air temperature, return air humidity, etc.

Hot/chilled water supply and return temperature, hot/chilled water flow, cooling valve position, hot water valve position, lockout temperature, etc.

### Duct static pressure and static setpoint

The system platform may provide the ability to determine required data collection durations and customize this upon request. System controllers extract data in instances where on-board controllers cannot transmit data.

### Criteria, Logic and Level of Data to be Collected

The system may collect all available data points. The system 100 collects data in support of operational analysis, recommended corrections, and M&V activities. The system uses utility consumption and weather data for building-performance analysis, baseline and benchmark calculations, and M&V tracking. The system may use operational and facility data points to understand at a holistic level the performance of each facility regarding comfort, air quality, and energy and operational efficiency. The system may use equipment inventories to measure energy consumption at the equipment level and rank the impact of improvements. In the end, every data point generated within a facility may be used by the system, which may attempt to collect that data on a frequent basis for EEMS.

### Justification and Cost/Risk Benefits for Metering & Sub-metering

The system may be expanded by adding additional metering after analyzing the available data. If a modern digital control system exists with data readily available, then additional metering may represent an unnecessary expense. This approach to making the best use of existing equipment and control-systems represents a change in the way the organization can make decisions using the system. Note the recurring system theme of using data and facts to make business decisions, versus investing in additional assets that may be unnecessary for achieving benefits.

For older facilities, inexpensive sub-metering can provide additional information without the expense of a full control-system upgrade.

### Data Collection and Frequency Schedule

The system EEMS solution will meet the company minimum requirements and offers an even better data-collection capability. The system may collect real-time data, which may be defined as having a one-minute interval. The real time collection interval is adjustable, e.g., up to a 15-minute interval or other interval. The table below lists a specific data collection and frequency schedule example.

| Company EEMS Requirements | | | System Solution |
|---|---|---|---|
| Categories | Type/Unit | Requested Frequency | Data Reading Frequency |
| Electrical | kW, kWh | 15 minutes | real-time |
| Natural Gas | CCF | 15 minutes | real-time |
| Water | gal. | 15 minutes | real-time |
| Steam | lbs., mmbtu, F degree, psi and mmbtu | 15 minutes | real-time |
| Chillers | kW, tons of cooling, F degree, flow rates | 15 minutes | real-time |
| Boilers | Fuel use, steam/hot water production, auxiliary load (pumps, blowers and fans) | n/s | real-time |
| Room/Zone Temperatures | F degree | n/s | real-time |
| Indoor/outdoor Temperatures | F degree | n/s | real-time |
| Load Consumption | Peak demand, date/time of peak consumption, etc. | n/s | real-time |
| Power Outage Information | date/time and restoration | n/s | real-time |
| Instantaneous Demands | watts, vars, volts, amps, kVA power, factor, etc. | n/s | real-time |
| UMS data | Utility data | daily | daily |
| eFMS data | Facilities inventory information & energy related projects | as needed | as needed |
| MTSC data | Maintenance Contact Information | monthly | monthly |

### EEMS Data Storage Capability for 15 Minute/Hourly Real-time Access and Reporting

The system solution may deliver real-time access and reporting of collected data. For most points, the system may poll at one-minute intervals. However, data is generally stored at the data collection rate. This means 15-minute-interval data is stored every 15 minutes, and hourly data is stored hourly. Data that infrequently changes (e.g. set points) is stored only when changed. No limit to the number of points collected and stored exists. Not only will the EEMS meet company three-year archiving requirements, but it also will extend the time requirement at the company request. The database architecture will not impose a performance penalty for increased volume of data storage.

### Item 3.2.2.1 Metering and Sub-metering of Major Systems

### Meter, Sub-meter, and Pulse Data Collection and Analysis

The system EEMS will collect data at each facility by installing a mediator 1102. The mediator 1102 currently supports standard protocols such as BACnet, Modbus, LonTalk, SNMP and dozens of proprietary current and legacy protocols of control equipment and building automation systems. The mediator 1102 can be configured quickly to the appropriate protocols, making building sensor and controller information available to centralized analysis applications in a common format. The mediator captures data elements from these systems.

### Overview of Proposed Metering/Sub-Metering Solution

The system solution will include required metering and/or sub-metering infrastructure as requested, meeting or surpassing the company's data collection requirements. This infrastructure will be connected to a facility mediator 1102 to provide connectivity to the central EEMS.

### Integration of Meter/Sub-meter into Existing company and Utility Equipment

The system will connect to utility-owned equipment via a KYZ pulse output for electric that can be installed on the utility IDR meters, and pulse outputs for gas and water. The system may maintain a real-time connection at each site with all assets required to meet these specifications.

Installation includes labor, materials, equipment and incidentals required to configure and integrate the EEMS systems including mobilization and setup, data collection, equipment and storage, communications linkage to EEMS data repository, and an established web interface to dashboards and reports. Installation may also include connection to one (1) utility provided meter pulse outputs to Mediator panel (wiring 100 feet or less), connection to one (1) utility provided pulse output from water meter (wiring 100 feet or less), connection to one (1) utility provided pulse output from gas meter (wiring 100 feet or less), installation of two (2) Modbus outputs from electric sub-meters, (less than or equal to 400 amps, wiring 100 feet or less) connect from customer provided Ethernet to Mediator panel (wiring 100 feet or less).

### Maintenance & Repair Support for Installed Metering Equipment

The system 100 may be managed through the system Network Operation Center (NOC) and may manage service requests via the EEMS.

### Additional Data Points

For each equipment type (RTU, VAV, AHU, etc.), the system may identify the minimum point types required to evaluate existing operations. Beyond those, the system will determine on a case-by-case basis if it can obtain more actionable information from additional points. As a rule of thumb, the system may pull all available points, because the more points available, the more powerful the analysis. Generally, though, point lists are not generic; they are identified on an equipment-by-equipment and/or system-by-system basis since the individual manufacturer, model, controller, and system design affect point recommendations.

### Calculated Energy Requirements

### Calculations, Parameters & Algorithms Supporting Identification of Anomalies & Diagnostics

The system 100 creates and displays a virtually unlimited number of calculations of almost any complexity. The EEMS will store and manage the calculation results in the same way as other interval data points, including viewing, reporting and further analysis, or even as a factor in another calculation. When the company adds new calculations to the system, the calculation engine will go back to the earliest point where all factors are available and can perform the calculation historically, as well as the ongoing calculations every 15 minutes going forward. This will facilitate the company experimenting with different scenarios and determine the impact of a change based on actual historical operational data.

Calculations range from simple (e.g., Delta T) to complex (regression-based Baseline Energy Model normalized for weather and occupancy patterns). The EEMS may support industry standards such as indices for thermal comfort (ASHRAE 55-2004) and minimum ventilation requirements (ASHRAE 62.1-2007). The ventilation index is an example where the system first will integrate data from external systems (space planning data for room sizes and uses).

### Algorithms and Options for Customization/Expanding These Algorithms

The system may implement numerous defined algorithms (e.g., delta T, pump brake horsepower, variable speed drive kW, cooling tons, make-up water Btu, heating coil MBtu). These operate by specifying the data points (or constant values) to use as calculation factors.

The EEMS will provide the company with options to customize its calculations. Users typically need this capability for more complex calculations where the system design will affect the calculation requirements. For example, calculating the CFM of outside air delivered to a specific room depends on the air handler design and available data points from the control system. The calculation engine also will allow company users to add entirely new calculations to the system.

### Data Feed from Local Airport/Weather Station for Energy Data Normalization

The EEMS may collect local weather data at the facility level by using standard Web services provided by NOAA's National Weather Service. It will normalize weather data to the NOAA standard if drawn from an alternate source.

### EEMS Interface with company Enterprise and External Systems (eFMS, UMS, MTSC) & Frequency of Data Transfer, Storage and Analytics

The system will integrate with existing company systems via standard interface protocols through its open, SOA architecture. The system design facilitates a rapid, low risk and seamless integration with these various systems. Details on the form and complexity of the interface depends on the systems, but the system EEMS may accept these systems' data at appropriate frequencies and volumes. The system 100 may include automated interfaces to the external systems where the system may scan for data updates to these systems. The system may then be able to transfer data easily as it is updated, at whatever frequency is required to build a complete picture of facility operations.

### Calculation of Initial Cost and Consumption Baselines and Demand Profiles

The system 100 may generate a Baseline Energy Record that is a formal baseline of energy usage. To that end, the system 100 may implement an energy model such as that shown in U.S. Patent #5,566,084 to normalize for weather and occupancy variables. The baseline calculations may employ at least 12 months of utility data and corresponding weather data, with 24 or 36 months of data preferred, and can use any level of detail from monthly utility bills to 15-minute interval data. Thus, access to utility billing data will facilitate the system to provide immediate analytical value.

The Baseline Energy Model calculation may use a polynomial regression methodology that factors in weather variables and occupancy patterns (weekdays/weekends, etc.), which is important at company facilities that are not 24x7 operations. Each utility meter has its own baseline model. Once calculated, the models may be converted to common units (e.g., MBtu) and mathematically combined for a total building energy baseline. (Water use also has a baseline model, but is not part of an energy total.) The system interface includes roll up baselines and benchmark the resulting performance against other facilities, districts, areas, or to the national level. The Baseline Energy Model may provide the basis for forecasting and budgeting, M&V, and greenhouse gas tracking.

### Collection Process of Historical Utility Data That is not Available in UMS

The system may gather utility bill and time of use (TOU) information. With the a company-supplied Letter of Agency, system implementers may acquire historical data from the local utility companies, which the EEMS can load directly into its repository to fuel baseline calculations.

### EEMS Capture and Storage Capabilities of Maintenance Contact Information

The system EEMS will store maintenance contact information and other company organizational data at various levels of the facility hierarchy. EEMS will store national, regional, and facility-specific information as meta-data attached to each node in the company facility network.

Integration of building automation and lighting systems (and any future such systems) are a core function of the system platform, and require no additional infrastructure beyond the initial installation of the mediator 1102.

### Integration Capability through the Use of Open Communication Protocols

The system platform is open, as defined by modern IT standards. No additional downloads are required. The system platform may be DHTML, dynamic XML, and AJAX both at the NOC and mediator 1102 (local site) level. The platform is open on both the I/O side and the GUI, and the data is bi-directional. The mediator 1102 Multi-Protocol Exchange (MPX™) software framework normalizes both IP and legacy serial-based protocol. The mediator 1102 supports building systems standards like BACnet, Lonworks, Modbus, and SNMP. The mediator 1102 supports IT and networking standards like TCP/IP, HTTP, HTTPS, FTP, and SMTP. This facilitates for intra-protocol communication and uniform application of services such as logging. This also facilitates the common presentation of information from all intelligent machines found in buildings.

**The** system's open architecture supports proven building systems engineering and selection which will work well with company's advised plan to add and upgrade lighting control, building automation and metering systems. The open architecture also supports proven enterprise applications, services and service providers never locking company into one proprietary provider or building systems manufacture. The system open architecture will empower company with choices and ultimate flexibility in engineering and procurement.

### Company EEMS User Interface

### Item 3.3.1 Dashboard

### Dashboard Features and Functionality

The system user interface (Ul) is a rich internet application (RIA) that provides an interactive framework for viewing dashboards and reports. The UI will present a holistic overview of facility performance by combining key items such as scorecards, recommendations, alerts, and energy/equipment data into a common format. Additionally, direct integration with the system NOC will permit real-time data analysis of HVAC interval data and energy consumption.

The EEMS dashboard has three main views: trends, real-time monitoring, and analysis. Each has a set of customizable dashboard elements relevant to the specific view. The user can select the data elements he/she wishes to analyze on their dashboard dynamically by clicking on a list of available elements and dragging the element to the frame. This will allow comparison of similar equipment or facilities, for example.

The EEMS has the ability to tailor the list of dashboard elements for each user based on their profile and privileges. An executive profile, for example, may have access to operating expenses, energy savings, and enterprise-wide energy consumption. A facilities manager may have access to building energy consumption, room comfort, and costs. An operations engineer may have access to detailed HVAC or Air Handling Unit interval data.

In addition to the dashboard, the system provides the user with additional insight and complimentary content, such as geographical analysis, financials, alerts, and relevant news.

### System Navigation and Available Customized Views

The system EEMS has user friendly navigation that begins with a secure user sign-on. The system will authenticate the user and return the user profile, in addition to the user's customized view of dashboard elements. The user will navigate between each dashboard view by clicking on the respective dashboard tab.

Each dashboard element will have a collapsed and expanded view. By clicking on an individual element, the element will expand to a larger view. In certain cases, the expanded view will permit user interaction. Examples of user interactions include (but are not limited to) increasing the time axis on interval or meter data, entering new dates, browsing to view data on a specific machine or system.

### List of System Generated Dashboard Elements

Dashboard elements may include the following elements:
- 30 day rolling consumption
- 30 day rolling demand
- Worst meter consumption
- Worst meter demand
- YTD energy costs
- Savings
- Baseline Energy Record
- Calendar View Consumption versus Baseline/Cost
- Tracking versus Baseline Energy Record

### Dashboard identification and Alert of Abnormaiities Features

The EEMS dashboard includes the following capabilities to detect abnormalities, identify predictive maintenance and provide actionable information:
Real Time Interface: A user will be able to select a certain number of data values or formula results for any combination of machines or systems and then view them on a real time page with any active fault information. This will be valuable if a technician wants to view the data values together. The real time interface will facilitate a user to proceed through timestamps for items that do not connect in real time.
Interactive Graph: After configuration, a fault will link to an interactive graph. The user will be able to select from one of the time ranges on which the fault occurred or will enter a customized range. Pre-selected values and a multiple graph template will load, which will provide more information about that particular fault. The user can modify the interactive graphs to analyze the problem further or to create a new graph.
Interactive Graph Features include: This includes the ability to plot the graphs at once; the ability to graph any stored data value or formula (even with different conversions such as C or F for example); and the ability to zoom or expand into the graph with the mouse, scroll forward and backward in time, draw trend lines, and save or email graphs.
Alerts: The system EEMS will generate and display alerts based on faults that the analytics will identify. These faults could range from machine-level maintenance issues to zone comfort or performance issues and to holistic facility-wide energy management issues (such as a Demand Response event or a significant change in local energy prices)

### Reporting

The system 100 may implement the following Reports and Reporting Points:

| system EEMS Reporting | |
|---|---|
| Greenhouse Gas/Carbon Footprint | - Periodic Carbon Footprint Report |
| - SWAG conversion (CO2/kWh, etc. | |
| ENERGY STAR Reporting Baseline report with weather | Energy Summary/Usage Report (i.e. Dashboard Reports) |
| normalized data Energy consumption profiles matched with operational characteristics | Current Reading/Current Reading Summary Daily Comparison/Daily Comparison Summary |
| | Daily Consumption/Daily Consumption Summary |
| Energy metrics - i.e. ENERGY STAR benchmark score, btu/SqFT | |
| | Electric Utility Monthly Consumption /Electric Utility Monthly Consumption Summary |
| Benchmarking reports - i.e. past vs. current performance, industry average, best practice, etc. | Benchmarking reports |
| | Historical Energy Comparison Report |
| | Portfolio benchmarking Report |
| | Building Pattern of Operations - i.e. TOUs consumption data |
| Periodic survey results reports Periodic audit reports | |
| Monthly and Annual Overall | Energy Summary/Usage Report (see above) |
| Energy Consumption Reports | Building Energy Use Comparative to Baseline |
| All utility consumption | |
| Energy usage index (EUI) in Btu/Sq Ft | Building Operations Scorecard Systems (BOSS) reports |
| Weather normalized data per facility | Room Summary/Detailed Scorecard |
| Performance Analysis | Reporting Dashboard |
| - Comparison of developed EUI to normalized baseline budget per facility | Energy Summary/Usage Report (see above) Actual Energy Costs vs. Budget Amount Summary Report |
| Equipment Analysis Reports Sub-meter data of power feed to the equipment load in kW compared to predetermined operational threshold | BOSS Reports (see above) |
| | Interactive AFDD Reports (refer to question d above) |
| | Fault Summary Report |
| | System/Sub-system Scorecard |
| Associated system temperatures and/or equipment operation for major equipments | |
| Exception/Variance Reports by | BOSS reports (see above) |
| facility and equipment type | Interact AFDD reports (refer to question d above) |
| Measurement & verification plan | Baseline Development Reports |
| report per facility | Building's Savings Potential Based on |
| List of installed Energy Conservation Measures (ECM)\ Installed ECM compared against weather normalized baseline data | Benchmark Comparison |
| Energy savings calculation based on historical billing data | |

### Type of Report Definition

The reporting Dashboard may show a top-level view of most critical energy management elements that will facilitate users to drill down information to site level.

Periodic Carbon Footprint Report: provides monthly/quarter/yearly carbon measurement of energy consumption per facility/region and/or of the enterprise real estate portfolio
Energy Summary provides energy consumption information summarized by site, type of building, and type of energy
Usage Report includes the usage data displayed as the daily average of the total usage in a billing cycle.

Benchmarking reports include:
Historical Energy Comparison Report shows comparison of energy usage between the prior and the current years and
Portfolio Benchmarking Report shows Comparison of energy usage among similar buildings within the enterprise portfolio (per region or at the nation level) and/or against industry best practices
Building Pattern of Operations - i.e. TOUs consumption data demonstrates TOU consumption pattern and long term energy consumption in kwh/day and cost trend ($/month)
Building Energy Use Comparative to Baseline consists of annual/monthly snapshot cost at the baseline level and unit energy cost ($/SqFt) per facility
Building Operations Scorecard Systems (BOSS) reports
Room Summary Scorecard contains ranking of room portfolios within a facility/building based on comparing their actual performance against the facility/building service level objectives - i.e. comfort, efficiency, and operations
Room Detail Scorecard shows each individual room, organized by air handle and the pass/fail ratings and indication of which operational data led to failure ranking
Actual Energy Costs vs. Budget Amount Summary Report displays graphs up to 12 months' worth of data in one report
Web-based Exception Reporting and Alarming provides a list of alarm and
Interactive AFDD Reports
Fault Summary Report contains advanced sorting capabilities for a summary of quantity of faults identified by the location and machine or system within any selected specific period. It also lists fault descriptions, severity ranking, and the fault monetary impact. This information helps prioritize corrective actions
Subsystem Scorecard includes assessment results and explanation failure rankings of various primary and secondary systems and equipment throughout the building, such as air handlers, chilled water, steam and hot water, pumps, heat recovery units, etc.
Baseline Development Report contains weather-normalized energy consumption based on regression analysis
Building's Savings Potential Based on Benchmark Comparison comprises measurement and verification information - i.e. before and after savings and median savings - per facility that has implemented Energy Conservation Measures
Trend Analysis and Benchmarking Reports Capabilities
system EEMS performs trend analysis and benchmarking by creating sophisticated graphics from interval data stored in the repository. Graphics for trend analysis include, but are not limited to time-series daily load profiles, multi-daily profiles, averages, highs and lows, point overlays and 3-D charts. The EEMS also provides a monthly consumption profile during a fiscal/calendar year or comparison of these monthly profiles over the years. These graphics will facilitate the company to analyze their building performance quickly over time.

The EEMS will generate benchmarking reports by plotting whole-building energy consumption for each building in a bar chart. The company also will have options to compare their facilities by size, climate zone, building types, and will be able to benchmark their portfolio to industry proven practices and typical industry benchmarks such as annual energy use intensities (EUIs), etc

### Ad hoc Reporting Capability

Users will be able to customize and design trend analysis reporting for interactive, ad hoc usage. Users can create reports with a simple drag-and-drop interface and save the results, if desired. Users may export data and charts into Excel, .csv, or other common formats. Additionally, for users with limited access, predefined reports will offer a variety of selection criteria and will be downloadable into a variety of formats, including PDF, XML, .csv, and Excel.

### Software for Accessing the Dashboard

Users may access the dashboard through a standard Web browser with Adobe Flash player to access the system EEMS.

### Greenhouse Gas/Carbon FootPrint and Energy Star Reporting

The system EEMS will be able to track greenhouse gas (GHG) emissions and identify options for carbon footprint reduction, including priority areas, reduction initiatives, and timeframes to achieve results with a reasonable commitment range. The methodology may be aligned with GHG protocol and Carbon Trust approach. system can assist the company with Greenhouse Gas/Carbon Footprint and Energy Star reporting by:
Providing carbon equivalencies (with select REC products) and annual reconciliation reports based on actual utility-billed usage.

Public relations management through joint press releases, press events, and alliance acknowledgements.

Assisting with applications to the EPA Power Partnership Program or to the CRS/Green-e Logo Program (if applicable) to the Energy Star Certification and/or Partnership Program, EPA Power Partnership Program or to the CRS/Green-e Logo Program (if applicable).

### EEMS Capabilities to Accommodate the company Geographical Hierarchy & Equipment Analysis

Data configuration supports both functional and geographical hierarchies. The system will support an array of hierarchical views of the underlying data that the company can organize on a geographical or equipment basis. The system will roll up Baseline Energy Models, tracking and reporting by facility/geography, department, or utility type, etc. Similarly, the Building Operations Scorecard analysis with summary level reporting can roll up by geography, equipment types, or building functions, etc.

### Integration Capability through the Use of Open Communication Protocols

Performance tracking reports will compare operations against the Baseline Energy Record. These reports will provide ongoing measurement and verification of operational performance, normalized for weather and occupancy/schedule variations.

### Remote Monitoring & Analysis Operational Support

### Certified Energy Managers

The system may be operated or monitored by two full-time, on-site, certified energy managers.

### Remote Monitoring & Analysis and Diagnosis

### Notification, Escalation and Verification (auto-correct) Process

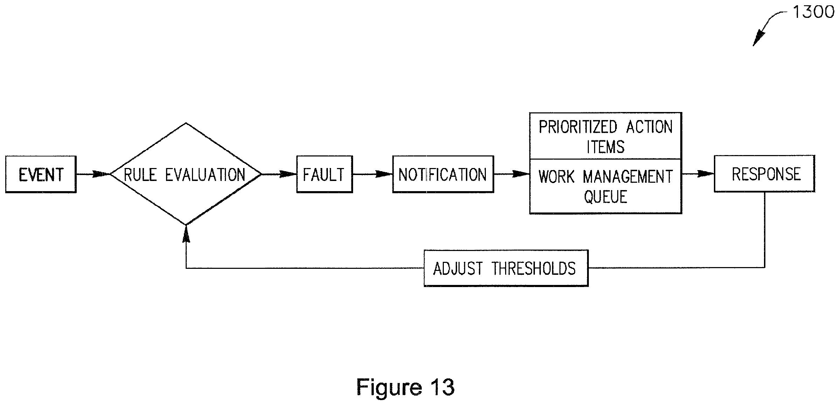

As shown in Figure 13, system's EEMS supports threshold-based alerting and notification 1300 of raw input data and data derived through the analytics engine. The user can configure threshold criteria. The system EEMS incorporates notifications and prioritizes them based on customizable business rules. These notifications can be integrated into a users work queue.

### Detailed Automated System Functions and Repeatable Processes

The flexible EEMS user interface facilitates a user to manage directly his/her alerts and the notification process. Alerts and notifications are integrated into the user's work queue, permitting detailed tracking and resolution of alerts.

### Overview of Business Rules and Data Configuration

The first step in the monitoring process will be configuring site data, meter data, temperature data and utility data into monitoring groups. The EEMS will process these groups automatically, making them quickly accessible for visual review.

The business rules may be based on standardized set points and proven practices, as agreed in discussions between the system and the company. Typically these rules are organized around a balance of comfort, efficiency and operational performance. The AFDD (Automated Fault Detection & Diagnostics) system can be configured to send aierts and notifications automatically, based on these business rules

### Business Rules for Detection of System Anomalies and Corrective Measures

system EEMS will apply business rules in a systematic manner to identify common issues that drive inefficiencies. The BOSS energy scorecard system will identify issues associated with Comfort, Efficiency and Operations indices. These indices are created on a room-by-room basis, allowing for granular detection of system anomalies, and the illumination of a clear path to apply corrective measures.

### Key Outputs of Reactive and Proactive Monitoring and Analysis

The EEMS for the company is created to achieve the right balance of comfort, efficiency and improved operations. Outputs take the form of identified problems rooted in hardware or programming. Built-in mediator 1102 capabilities will identify and resolve the majority of programming issues remotely. Maintenance personnel will correct identified hardware issues, whether mechanical or electrical/electronic. The associated work order will include detailed information about the identified problem so that problem resolution is rapid and straightforward. The solution will then confirm that the work undertaken resolves the identified problem.

### Process for identifying, recommending and prioritizing

In general, priorities are based on the level of effort (labor and materials) to achieve design intent. Priorities may also be determined by a collective decision of the EEMS and the facility representative. The highest priority fixes are typically those with the least cost and greatest impact.

Scorecards may be Re-run periodically to assess building operations by their key performance indicators. The scorecard will determine areas for operational concentration. Simultaneously, the AFDD system will identify equipment issues in advance of failure, turning reactive maintenance events into proactive ones.

The system 100 may prioritize Energy Efficiency Measures (EEMs) and demand management opportunities based on the level of effort (labor and materials) to achieve the predicted level of impact. This business case will be shared with and approved by the facility representative. Highest priority fixes are identified by the highest level of potential positive impact. The system would achieve and maintain optimum building performance through the use of baselines and scorecards. The system may periodically and automatically rerun standardized scorecards to assess the building operations against key performance indicators. The scorecard will determine areas for operational improvements focused on comfort, operations, and efficiency. Simultaneously, the AFDD system will continuously identify equipment inefficiencies in advance of failure, turning reactive maintenance into proactive maintenance.

### EEMS Capability to Implement Recommendations

system may, as examples, implement recommendations in one of two ways. system could implement most software changes through remote access/control of a facility's systems using the two-way communication capability of the Mediator™. system could also implement fixes that require physical corrections through its established national network of maintenance personnel (assuming that the company prefers that the system implement the changes instead of the company employees).

### Cost Estimating and Budget Forecasting

The Baseline Energy Model builds on cost estimating and budget forecasting. The EEMS creates the model using historical energy usage, weather and schedule data. It develops an energy/utility forecast using the energy model, anticipated weather (with ranges for more extreme and more moderate weather) and expected building occupancy schedules. The last step applies building tariff information and targeted energy savings to determine the utility budget.

### Minimal Requirements for the company Involvement

the company implementation team supporting the project would include project managers to coordinate with local offices, regions and project personnel. Some personnel would obtain engineering information about sites and reintegrate findings into the company engineering organization. The system does not require the company to provide its own resources for installation, programming, service, maintenance or controls-system repair.

the company' support with giving vendors access to its facilities is a key factor in the project's success. This would help define communication methods, establish connectivity and perform initial validations. the company would need to provide standard operating guidelines such as sequences and set points for each facility so that the system can to measure and verify compliance and performance. Helping the system understand the company' existing processes for managing and solving faults is important to the joint success. The company may also help with setting the financial thresholds and business rules to trigger specific work activities.

### Ability to Plan and Implement Measurement and Verification (M&V)

### Process and Prior Experience with Tracking, Validating and Reporting M&V

The system may have the capability for Measurement and Verification (M&V) of "installed energy conservation measures." One approach would be to establish a baseline and then track numerous quantitative measures of building health and efficiency (efficiency, comfort, and maintenance). The system may base the method for measuring a wide range of performance factors on indices that track thermal comfort and ventilation based on ASHRAE standards. The system may track these factors in addition to tracking the traditional power and efficiency indices (i.e., kWh, kW, Therms, Btu/square foot, etc.).

The system uses a combination of utility bill, utility time of use data, whole meter data, and 15-minute building-control data to analyze building operations and to find and verify energy savings. Each data source provides insights into building operations and energy-reduction opportunities. The system will track system-change recommendations against a baseline set using a standardized methodology. This confirms that the system will verify and track results against a pre-determined goal.

As the company requested, the system may calibrate the baseline to the FY2003 utility bills. The system may normalize the baseline by using additional inputs such as weather independent load and cooling/heating loads.

The system provides data-rich methods for tracking system performance should not require sub-metering. With information already available through existing sensor systems, the system can calculate the energy consumption in the building systems easily and accurately. The system may use sub-meters selectively should the company wish to isolate lighting, postal equipment, and miscellaneous plug loads.

The system may provide the following post-implementation support services:

### Help-Desk (at Network Operating Center)

A multi-tiered help desk will augment the support team with skilled resources to resolve user needs quickly. The Post Implementation Support team will provide customer support throughout the deployment cycle.

### System Maintenance & Enhancement

Some issues and requests may need system changes through configuration or code changes. The system application maintenance resources will triage problems to assess priorities, and then will begin completing the work using the extensive tools, resources, and knowledge capital available to them.

### Subject Matter Advisors'(SMA) Support

system SMA/E supports are ongoing throughout the project deployment until the end of the service contract. Their primary roles to provide in-depth energy management analysis whenever necessary

### Risks and Possible Constraints

The system may be implemented with a standardized project management process to provide a smooth startup and will extend through the initial pilot of any number of buildings and the subsequent rollout to any number of additional buildings. System implementation schedule often depends upon:
Access to building facility managers
Limited building control system documentation (site plans, control drawings, etc)
Uncommon protocols not currently supported by more than 65 interfaces built into the mediator 1102
mediator 1102processing ability across devices installed on oversaturated networks
Operational back-up and maintenance/repair plan in the event of system outages or lost communication
The system NOC may operate 24/7 and will receive immediate notice in the event of communication loss to a facility. The system will monitor connectivity and data storage continually and confirm that the system sends out automated SMS, email, RSS and phone-call notifications to a designated list of people who can solve or further investigate the issue. The system will use local and regional affiliates to provide efficient response times for any level of support. It also can integrate the response system into the existing the company incident tracking system, if appropriate.

system employs robust technology at the control level that is highly resilient to loss of power or external communications. In the event of power failures, the mediator 1102supports optional gel cell battery, on-board trickle charger, and uninterruptible power supply (UPS). The mediator 1102 will continue to log data locally until issues are resolved.

### Role and Responsibilities of Program Manager(s)

The system implementation may engage a program manager (PM) to direct and coordinate the activities within an EEMS program rollout to obtain high efficiency and economy of operations. He or she will manage all contractors. The PM will have a complete and thorough understanding of energy management and will have a deep knowledge of large EEMS implementations. The PM will interpret, organize, execute and coordinate assignments. The PM will make decisions about the budget and all program-relevant issues. He or she will escalate strategic issues to the program sponsor for joint decision-making.

The PM's primary responsibilities will include:
Developing and maintaining the rollout schedule with program priorities
Developing and managing project scope, budget and schedules in accordance with approved plans
Allocating and managing project resources
Monitoring progress of and providing support for global efforts and implementation programs on a weekly basis
Reporting on status and performance
Managing aiiiance partners, contractors and subcontractors
Resolving outstanding risks and issues
Developing necessary communication and training material
Question j - Proposed EEMS Open Architecture
The mediator 1102 design is based on open systems and technologies, including the Linux Operating System, standard RS-232 and RS-485 communication ports, Dallas 1-Wire bus ports, 10/100 base TX Ethernet connectivity, support for a wide range of TCP/IP related protocols including UDP, TCP, SMTP, IP, FTP, HTTP, HTTPS, SNMP and more. The mediator 1102 supports data retrieval by communicating wired or wirelessly to the meter/sub-meters and via more than 65 protocol drivers that the mediator 1102 supports.

The data warehouse, data-analysis tools, publishing, reporting, GUI, and other tools/protocols may meet any standard.

| Protocol | |
|---|---|
| Description | Example |
| Operating System | Microsoft Windows, Web (Microsoft or Linux Servers) |
| Database | SQLServer, Oracle |
| Management | |
| Data Collection | OLE, BACnet, LonWorks, Modbus |
| Data Analysis Tools | Excel, CVS, PDF, Access |
| Publishing | Microsoft Office (Excel, Word, PowerPoint), XML, HTML, PDF |
| User Interface | Web |
| Other protocols | XML, Web Services, TCP/IP, SQL |

### Open Architecture Solution

### EEMS Open Architecture

The system has designed and built every aspect of the EEMS architecture and platform using the latest development methodologies, open protocols and advanced technologies. This begins with the mediator 1102 and its ability to connect seamlessly to existing and often proprietary protocols of Trane, Barber Coleman, Invensys, Johnson, Staefa, etc. Building data accessed through this device is Web-facilitated and securely transmitted to the system NOC. Advanced data services and analytics platform then manages the data. The NOC is built on an SOA, and the portal capabilities facilitate the clients to access data easily and drill into more advance analytics to monitor and manage their buildings' performance.

These facts combine to create an open platform that isn't tied to any one supplier's proprietary protocols. the company can make software, infrastructure and capital investments independent of considerations for the system EEMS because system's solution is free to interface with any standard or proprietary protocol.

### Integration with Non-standard Equipment

The mediator 1102 supports more than 65 proprietary communication protocols for non-standard equipment. The mediator 1102 integrates into the physical device either via RS-485, RS-232 or !P and extracts the data in the framework of the Mediator™. The mediator 1102 normalizes the data and facilitates it to be moved bi-directionally back down to the building systems or through the enterprise. Due to this versatility of the system solution, system can integrate with whatever equipment the company is using, standard or not.

### Training Program

Training on the system may include a pilot and national training plan, such as the postal service Instructional System Design (ISD) Model and Training Management Procedures (resulting, e.g., in a customized two-hour training course that includes instruction on: How to Use the EEMS Reporting Tool (i.e., navigation, functionality and creating ad hoc reports) and How to Use the Reports to Manage Energy Usage to Improve Business Results. The training material will include instructor notes and class exercises to reinforce learning. In addition, on-screen help files will be available within the EEMS to support a user at time of use. Training may include the "train-the-trainer" method.

The system training may be delivered via the Web through the company Automated Enrollment System to complement the instructor-led training. According to ASTD industry learning standards, an interactive, Web-based training course can increase retention by 70 percent and reduce training time by 50 percent. This option provides an easy-to-access approach for ongoing refresher training.

### Ancillary Services

The system solution will lay the groundwork for integrating all system expansions and potential ancillary services into a common, open platform. With the mediator 1102 as the hub, the company could integrate any existing or future technologies into the EEMS. The proposed solution will use existing infrastructure and provide an open pathway to future upgrades and system expansions. Future system expansions would be accomplished without requiring controller upgrades or proprietary, single-source systems or equipment. The mediator 1102 ability to send and receive data will give the company a powerful tool for remote facility control. The mediator 1102 open architecture is the sensible technology platform for seamless integration with other business systems.

### Modifications/Upgrades to Standardize Operational Sequences and Control Points

No additional modifications and/or upgrades will be necessary for standardizing operational sequences and control points. The mediator 1102 can connect to any existing (legacy or upgraded) system and, through its two-way communication capability, send standardized operational sequences and control points to any site.

### Technical Approach for Identification, Integration, and Standardization of the company Systems

system's EEMS abstracts the data from existing and future the company systems into a common object model. This permits uniform processing, presentation and sharing of data among sub-systems. The mediator 1102 acts as a foundation layer to interface with existing building management and metering systems via its standardized and flexible array of IP-based services, while the EEMS uses an SOA to maintain high flexibility for integration into other the company enterprise software systems.

### Remote Control of Equipment

### Question a - EEMS Remote Control Capability

A significant benefit of system's tight integration with local control networks and equipment is the capability to configure and control securely the remote building-sensor logic and control-system sequencing from the NOC. All systems and data integrated into the mediator 1102 may be accessed remotely. Local mediator 1102 applications (closed loop math/logic, schedules, trends, alarms, events, Web page GUI, systems and data configuration, data exporters, ADR, and AFDD services, etc.) can be modified and enhanced remotely based on agreed business rules.

### EEMS Capabilities and Deployment for Demand Reduction Strategies

system NOC can send real time pricing of electricity for ISO DR programs. The mediator 1102 can be programmed via on board closed-loop logic to shed electrical loads when the DR signal is sent.

### Optimization of Equipment Configuration

AFDD can remotely improve control-system sequencing (based on operational requirements, design intent and space comfort) and resolve many control systems faults (depending on fault level). This continuous monitoring, improvement and fault resolution facilitates better equipment operations.

### Preventative Maintenance and Repair

### Monitoring, Tracking and Reporting Capabilities for Preventive Maintenance Activities

system may employ a thin Client Service order and project-management tracking system to log, report, track and verify service deployments. The system facilitates real-time customer updates on daily service calls and large project rollouts. For all future scheduled visits, the system includes the routine maintenance items to be performed, the time allocated, and the time available to solve identified faults.

Continuous analysis and AFDD system is tightly integrated into the project-management tracking system. The majority of preventative maintenance tasks are handled as "condition-based maintenance" tasks. Service work orders are automatically dispatched as a product of the continuous commissioning and AFDD process. The EEMS M&V process independently verifies the performance of serviced equipment.

### Scheduling and Deployment of Preventive Maintenance Activities

The Fault Resolution Scheduler (FRS) tracks and resolves faults. Faults are assigned to scheduled service visits (or expedited in cases of urgency) and are sent to the system field services. The majority of faults found do not normally justify urgent unscheduled action. The FRS specifies the action the system technician should take (investigate or solve). The FRS also estimates the time to accomplish the required action for the fault. Faults are automatically scheduled with future service visits once the FRS assigns the visit type, time and action. Actions included as part of routine maintenance are automatically assigned to the next visit.

### EEMS Capability to Incorporate Electrical Signature Analysis for System Diagnostics

Level three of the system AFDD platform can handle condition-based detection and diagnostics of mechanical faults using electrical signature analysis incorporating voltage and amp data. This technology works well on the company sorting equipment. This eiectricai data is not often avaiiabie without additional sensors on HVAC equipment. The system can apply similar technology used for electrical signature analysis to perform automated early detection and diagnosis of problems to thermodynamic data points that are often available without adding extra sensors.

### List of Client Credentials for EEMS Preventive Maintenance Management Capability

### Equipment Types and Application List

### Process Flow Chart and Average Response Time

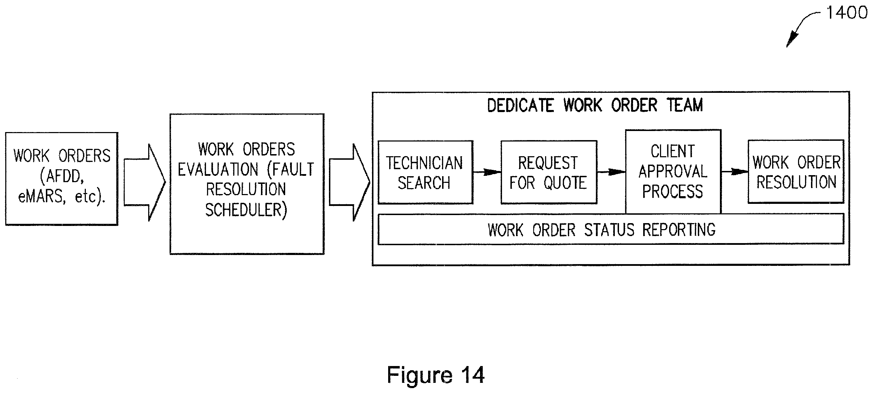

Figure 14 show a process flowchart 1400 for responding to work orders.

Responding to:

| | |
|---|---|
| Emergency: | 4 hours |
| Urgent: | 24 hours |
| Routine: | 3 - 5 days |

### Maintenance And Repair

Technicians and Engineers Deployment Capability for System Repair

The system may be supported by an extensive fleet of sign trucks and cranes operated by a highly trained professional staffs and broad nationwide affiliate network. When a work order is created in the system system, it searches a database for the appropriate technician by ZIP code. The system then narrows the search to a specific field, such as EMS controls, electrical only or sign repair.

### Tracking, Scheduling and Reporting of Maintenance & Repair Activities

The FRS specifies the action the system technician should take (investigate or solve). The FRS also estimates the time to accomplish the required action for the fault. Fault details are sent to special client teams in the NOC. These teams issue work orders, obtain schedule dates, and note the cause of the problem, the repairs that they made, the repairs pending, and the parts ordered to complete the work. The teams also obtain quotes from the technician's office, obtain customer approval and complete the job. Customers can access the current status of their orders and issues within the EEMS.

### Equipment Types Repaired and Repair Actions List

The system provides maintenance, repair and upgrade services for various electrical, lighting and mechanical systems. The repair services include equipment/computer design and re-build, repair of light controls, UPS systems, dedicated circuits and sub-metering troubleshooting.

### Integration with Trouble Ticketing and Maintenance

The system's EEMS continuously identifies and prioritizes equipment faults. The prioritized punch list can be sent to eMARS, based on pre-defined rules. The eMARS can communicate completion of various trouble tickets for energy-conservation measurement and verification purposes.

### Bill Management and Payment

### EEMS Utility Bill Management and Payments Features

system provides a comprehensive and industrialized solution for utility-bill management and payment. The system may provide an end-to-end solution to facilitate an efficient and tightly controlled invoice processing and payment service. The system may realize utility spend reductions through auditing at scale/depth and rate analysis. The system provide flexible reporting of detailed utility data to drive future conservation and sustainability initiatives.

### Integration of Utility Billing and Consumption Data via EDI 810

The system can receive and process utility bill data via an EDI (Electronic Data Interchange) transmission from a vendor. A dedicated EDI group may develop the technical relationships and maintains strict requirements for quality in the transmission and to confirm that all key data elements are received. They also monitor daily feeds/rejects for process integrity.

### Value-added Interfaces through APIs or Other Open Non-Priority Protocols

The EEMS solution uses an open architecture and SOA design principles, enabling integration with endless Web services and Web 2.0 APIs. Additionally, connectivity to enterprise data stores and applications facilitates integration to ERP systems and other back-end corporate data. Value-added interfaces could include Web applications, mobile widgets (for delivery of information to mobile phones), or RSS feeds.

The information retrieved and/or delivered through these interfaces could include facility information such as utilization of the parking structure, position of the elevators, lighting status, room-reservation status/occupancy, status of blinds, sprinklers, air filters, fire alarms and a host of other facility properties. General connectivity to the Web can permit delivery of blogs, podcasts, RSS news feeds, video streams, and other data for direct integration into the EEMS portal.

### APPLICATION AND system FUNCTIONALITY & TRAITS

### EEMS Infrastructure Support Capacity

The system may support an unlimited number of users and user groups effectively. It grants permissions for data access to user groups according to any of the appropriate 255 levels available for read, update, add, and delete access. Access control applies to both properties of data items and controlling hierarchical views (e.g., specific facility) of data the user can view.

### System Access, Navigation and User Access Functionality

System access may require a username/password. The system supports strong passwords (length, character mix, and character repeat restrictions) with configurable options for features such as password expiration and reuse frequency. The EEMS uses role based security to determine the menu options and functionality that a user can access.

### Support Services for Potential Upgrades and Customization

The proposed solution is fully scalable and compatible with almost any upgrade pathway. the company could extend, upgrade, and customize the EEMS as it sees fit without being bound to any specific equipment manufacturers.

### Overview of Business Rules and Data Configuration

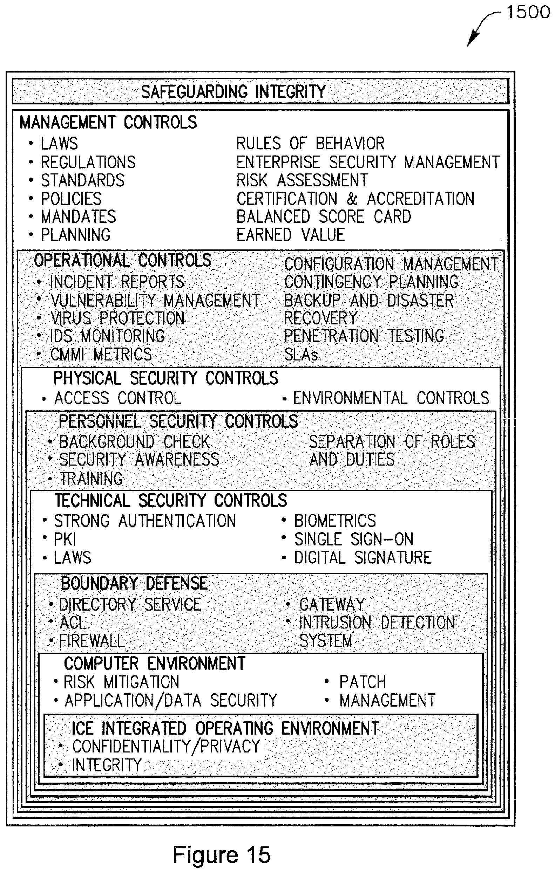

Figure 15 outlines the business rules, controls and technology (including data configuration) to provide a secure environment 1500 for analysis and monitoring. The system also would work with the company IT Security personnel to establish and facilitate joint methods for monitoring security procedures, mitigating identified security risks, and training system personnel on the company security policies and procedures. The system plans to conduct annual review activities including self-assessments, contingency plan testing, and vulnerability scans.

### Process for Data Access, Storage and Retrieval

The system may implement application security controls to govern the protection of the company data as it resides within the application. The role-permissions and user-profile definitions define user access and restrict users to only access data that their profile is authorized to see, keeping the core security principles of least privileges and separation of duties. The system would establish detailed account set-up procedures for users applying for access to the system.

### Compliance Procedures for Secure Environment

At a macro level, the system may implement a security solution includes keeping the company data separate from other companies' data. Only company-cleared personnel will have access to the company data. The system has secure communication processes between the company and the solution.

The system facility may be guarded by on-site security personnel and monitored 24 hours a day, seven days a week by a private security firm. The system controls the facility's entrances by proximity control, and monitor them by closed-circuit television cameras, which record on time-lapse recorders. All user access is logged and can be tracked and reported on if necessary. Floor and server room access requires badge and card key access.

### Security Policies and Procedures Compliance

The system EEMS and approach may meet any desired security policies and procedures, such as postal service Handbooks- AS-895-A, Application Information Security Access, AS-805D Information Security Connectivity Process, Administrative Support Manual Issue 13, Section 272.3 Clearances and Public Law 102-569, Section 508, Electronic and Information Technology Accessibility Guidelines.

### Database Security Requirements

### Overview of system Information Security Policies, Procedures and Compliance

The system may reside in an environment that meets any desired security requirements and the EEMS solution may run from one of a Department of Defense (DoD)-approved facility, for example, or any other systems, data centers, and facilities to meet or exceed Government data security requirements. The environment may use standard operation procedures (SOPs) to comply with Federal privacy requirements, applicable laws, regulations, and the company policies and procedures for developing, implementing, and operating information systems. The system may deliver performance and integrity reports to provide transparency into services the system provides, including elevation of security breaches in a timely manner based on established protocols , with layers of security authentication in the solution, down to the individual user and task level.

The environment may include running a separate instance of the solution on dedicated virtual local area network. Each standard environment includes the required firewalls, LDAP and SSL. All access to the system may happen via the Internet over SSL, with transmission of data feeds via a secure VPN connection using 128-Bit SSL encryption. All support personnel may have passed rigorous screening requirements and obtained whatever required security clearance.

### Data Encryption and/or Other Access Controls

### All data facilities containing client information may be encrypted.

### Business Continuity, Contingency and Disaster Recovery Planning

In the event of a severe impairment of operations at the NOC, the system implementation may include or would transfer operations to the most appropriate back-up site within a network of similar facilities within the United States.

The system approach may include planned, tested and documented procedures and processes to restore mission-critical business functions and avert unacceptable business interruptions in the event of an unplanned outage. The strategy places emphasis on business functions that are critically impacted. Identification of business continuity requirements early in the project provide the opportunity to develop options that minimize cost and increase flexibility by using existing capabilities.

In the event of a disaster and the implementation of the business continuity plan, the solution would support the following activities:
Identify key users included in disaster recovery activities
Develop and maintain a call tree and list of personnel authorized to declare a disaster
Develop and keep up-to-date emergency response procedures
Set up and maintain the disaster recovery site in a state of readiness
Application changes and upgrades must take into account disaster recovery plans
Infrastructure changes and upgrades must take into account disaster recovery plans
Make operating system, database, and third application software and licenses available for restore
Store vital system software and data (including the EEM application database and file systems) backups offsite in a timely manner and make them readily accessible from (remote) secured facilities
Perform disaster recovery testing using the disaster recovery site, procedures and personnel.

### Backup and Recovery procedures and Offsite Date Storage Processes

### MAINTENANCE AND SUPPORT FOR EEMS DEPLOYED HARDWARE AND SYSTEMS

### General Maintenance including Software Enhancement and User Guide Updates

The software life cycle development and maintenance methodology includes:
Smooth Operations: The system has processed and capabilities to develop, test and implement enhancements without disrupting ongoing operations
Data: There are numerous interconnections and data dependencies across the EEMS. System enhancements require full regression testing to reduce risk of data corruption or incorrect data processing
Staff: The operations staff supporting the EEMS system hold specialized functional and technical skill sets. Enabling the team to execute enhancements while understanding maintenance requirements maximizes staff skills, business and technical knowledge. It also encourages knowledge transfer, cross training, and provides growth opportunities
Technical Environment: Tightly integrating enhancement and maintenance efforts facilitates close coordination of development and testing environments and data needs and maximizes configuration management of source code and migration control
Training and User Guide Updates: The system will update training and user guides to reflect enhancements.

### Question b - Process and Methods for Identifying Software Deficiencies

On an as-needed basis, system application maintenance personnel will work with users to understand, research, and resolve problems with the EEMS. The system will work with the company to determine if a reported problem is a deficiency. The system will track deficiencies via a deficiency report management tool and record enhancements for possible consideration by application owners.

The system will base service levels for deficiency correction on deficiency severity. The system will base severity definitions on several factors including the criticality of the application. The system will resolve high-severity deficiencies as emergency corrections for immediate release upon correction, whereas non-emergency deficiencies will not be treated as an emergency and would typically not be released until the next scheduled maintenance release.

For software or data deficiencies, the system will assign to all deficiencies a severity code and will correct the deficiencies in accordance with the company governance processes. The system will work with the company to define the characteristics of severity levels that drive the release path of a fix. Equally important to application deficiency management is data correction management. Upon completion of an impact analysis, the system will address data fixes appropriately.

### Maintenance Cost

The cost to fix deficiencies (i.e., application not working as documented) may be included in the maintenance costs.

### Response Time and Process for Help Desk

The Help Desk approach provides the EEMS users with a central contact point to provide rapid issue resolution and customer support. Support starts when an end user contacts the Help Desk with a request. The Help Desk uses industry-standard tools to record contacts as trouble tickets with information regarding both issue and resolution. The system may use Standard Operating Procedures (SOP) such as those used on Federal government projects. The Help Desk performs data extraction at regular intervals for analysis to determine trends and develop approaches to resolve common issues. The help desk is available 7 days a week, 24 hours a day, 365 days per year. The average response time for help desk calls is driven by the service level agreements (SLAs) in place with a given customer, but average at around 45 seconds.

### EDI Exchange Service Business Partner Communication Options

The system EEMS supports standard EDI protocols including EDIINT AS2, FTP w/PGP, and connect:direct.

The system may employ Internet Protocol (IP) infrastructure that facilitates the effective integration of disparate building systems. The system may integrate third-party building systems that used protocols such as Modbus, Lonworks®, BACnet and numerous other current, legacy and proprietary protocols. system's ability to seamlessly connect to existing and often proprietary protocols of Trane, Barber Coleman, Invensys, Johnson, Staefa, and more is a critical capability to help the company receive a truly open architecture. The system may also incorporate diagnostic tools that facilitate persistent and interactive commissioning. The system may combine utility bill, Time of Use (TOU), metering, and Building Automation Systems (BAS) data into the process of energy reduction. The system may further employ advanced Automated Fault Detection and Diagnosis (AFDD) analysis for HVAC and refrigeration equipment delivered as a browser-based Software as a Service (SaaS). This provides intelligent remote applications that continuously analyze sensor, machine, and building system data create prioritized, actionable information are hosted on a scalable M2M (Machine to Machine) platform providing data and FDDI analysis results via IT open-standard Web services. The system may also combine both national and Web-based electrical and controls product distribution with service, support and project management capabilities. The system may include the following solutions: Intelligence and tools to help customers make informed decisions and manage electricity purchasing risks, thorough energy analysis and strategic pricing options to meet customers needs, online reporting tools with access to energy usage and billing information, renewable energy, load response programs and wholesale origination power purchases with generators. Expense-management solutions, e.g., from Cadence, may be implemented to allow multiple site enterprises to more effectively manage and reduce electric, gas, water, sewer, lease and waste expenses.

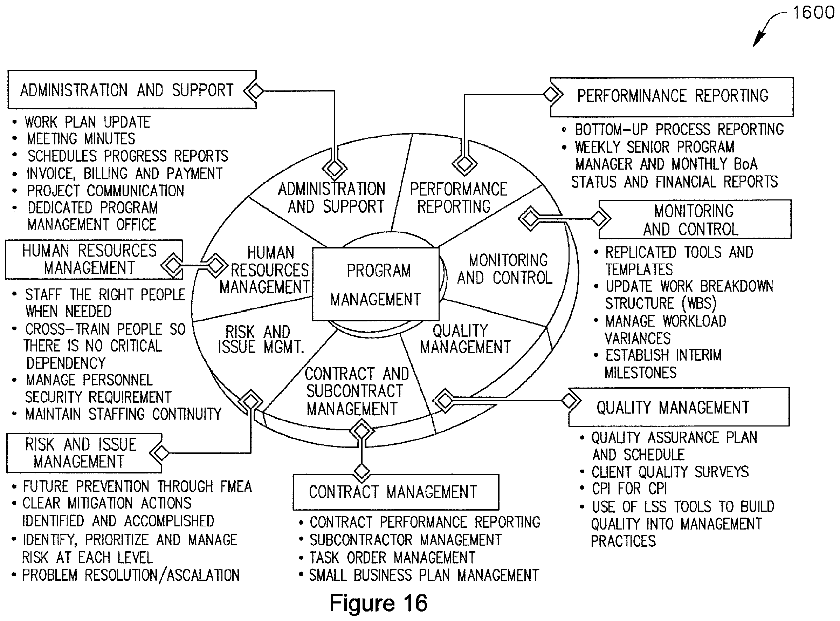

Figure 16 shows a program management methodology 1600 for the system 100, which may be driven from a strong Program Management Office (PMO). Figure 16 shows an example of a PMO structure to provide the company with an established and mature set of program management services, reducing startup time and accelerating savings realization.

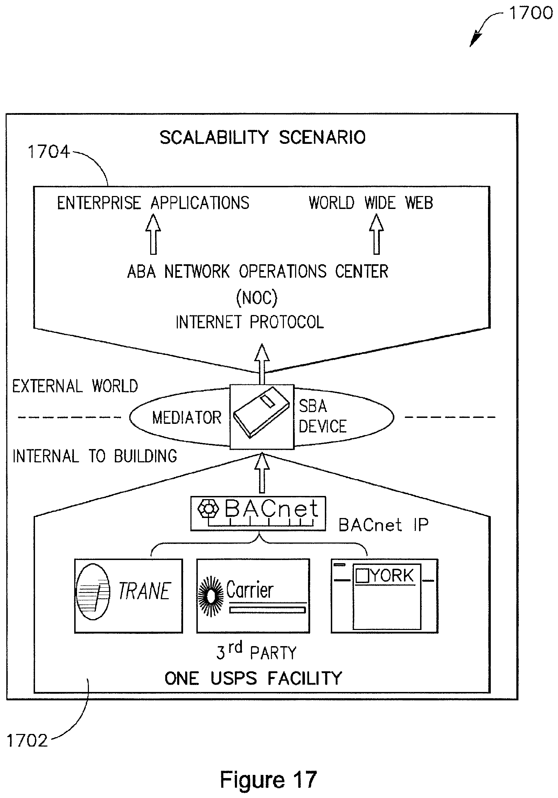

Figure 17 shows a scalability scenario 1700. The scenario 1700 connects buildings 1702 to the external world 1704 through the mediator 1102. The scenario 1700 leverages Internet Protocol or other protocols, Web Services, Web Interfaces, or other interfaces to the Network operations center 1106.

The scenario 1700 may employ a Site Level Infrastructure (SLI), such as a Web-facilitated SLI, as the backbone of the solution. The mediator 1102 comprises hardware that resides inside the four walls of the company facilities. It is an IP-based device that serves as the conduit to the EEMS. The system 100 supports local Web-based real time views of meter and machine data, but the company will also be able to control the building at a site level, regional level and national level. Demand response (DR) may also be implemented across multiple sites as the solution would provide all functionality in a scalable fashion to the size the company will ultimately require.

The system may support reporting on not only what the consumption curves look like, but also support altering control strategies, schedules, sequences, and set points, etc. The system 100 infrastructure discussed above, provides supervisory control over existing systems (no up front need to start replacing equipment). The system provides real time reporting and M&V dashboards supplied by the score boarding and score carding approach. This visibility the system provides facilitates the company to make far better decisions going forward.

The company EEMS backbone would promote increased data analytics, pulling meter data as requested, but also a host of additional parameters:
60 second machine interval data via sensors or existing BMS (facilitates superior fault detection)
Real time machine efficiency (energy, carbon and cost drivers)
Sub meter and meter data
Lighting where available
Set points
The infrastructure facilitates: identification of problems, control HVAC systems, and commission continuously to improve performance. The infrastructure also would facilitate load management, sub-metering of major systems, identification and prioritization of preventative maintenance opportunities, and verification that buildings continue to perform within pre-defined energy-performance parameters.

The system may analyze available utility bills and time of use (TOU) data. The system may also compare the design intent of the facility to what it actually is doing and advise and work with the company on suspected causes and remedies of sub par performance. The system may make a large portion of the "fixes" remotely with the company concurrence and send them back through the backbone's bi-directional data architecture.

Table 1-5 below show scenario examples for the system 100.

| Scenario 1: Facility Manager - Managing signals, alerts, & alarms | |
|---|---|
| Current Capability | System 100 Advantage |
| Occasionally views BMS data to adjust setpoints in the control system in a reactionary mode to system alarms, events, hot/cold calls, or negative changes in the performance of the building. Spends hours attempting to diagnosis a "high pressure" alarm on a chiller and later calls a technician to determine days or potentially weeks later the chiller actually has a dirty coil .vs. the generic "high pressure" alarm issued by the BMS. | Logs into the SMART Buildings platform and reviews (in real time) the top energy and performance issues occurring in their facility. Actionable items are sorted by user-defined priorities, ranking, dollar cost impact, number of faults, etc. Facility Manager sorts the dashboard by chiller type and views the dynamic "dirty coil alert" generated at 20%, weeks and potentially months before the BMS has generated the static alarm at 60%. |

| Scenario 2: Enterprise Energy Manager - Tracking energy across a real estate portfolio | |
|---|---|
| Current Capability | System 100 Advantage |
| The Enterprise Manager needs to track the progress of the company's energy & carbon reduction programs across a portfolio of 20 buildings (lighting retros, BMS recommissioning, new equipment performance, etc). Limited to no connected real estate infrastructure, manual utility bill analysis in arrears monthly using excel, and manual report generation. | Continuous real time performance reporting at one minute intervals across the energy manager's real estate portfolio. Energy and carbon analytics highlighting buildings with the highest energy usage, trending, and drill down capabilities from portfolio rollup down to individual buildings and even down to a specific piece of equipment's performance. |

| Scenario 3: Facility Manager - Continuous commissioning | |
|---|---|
| Current Capability | System 100 Advantage |
| N/A - Current BMS does not support | With an ongoing snapshot of one minute interval data 24x7, System's energy models deliver continuous optimization of both schedules and setpoints in a building. Energy models deliver setpoint changes based on seasonal and occupancy changes throughout the day (e.g. 20 degree drop in temperature as a cold front moves into the area or the automated setpoint / schedule changes required from a cloudy morning to a sunny afternoon). |

| Scenario 4: Utility Company / ISO - Interfacing with the SMART City / SMART Grid | |
|---|---|
| Current Capability | System 100 Advantage |
| N/A - Current BMS does not support | Predictive capabilities in Systems and established energy models allow building owners to interface with Demand Response programs and structure their energy procurement to the best of their advantage, avoiding higher peak KWH costs. Advanced load shed strategies are implemented to take advantage of ongoing DR programs and incentives. |

| Scenario 5: Chief Engineer - Advanced building performance strategy | |
|---|---|
| Current Capability | System 100 Advantage |
| Chief engineer attempts to establish a building performance strategy to prioritize his workload based on the issues with the highest energy impacts. Realizes he has no way to conduct this analysis. | Delivers a real time dashboard sorted by the most URGENT faults in each building across the entire portfolio with their exact economic impact. Cost is derived from the specifications of each machine, combined with System's analytic models and data. |

As noted above, the system 100 may include a mediator 1102, such as a Richards-Zeta Mediator 2500. The mediator 1102 may implement a middleware system including hardware (e.g., a Richards-Zeta mediator 1102 Multi-Protocol Exchange device) and software (e.g., a Richards-Zeta mediator 1102 system software). Thus, the mediator logic 1102 may be implemented as an embedded device with no moving parts, including a journaling file system that stores data on a Flash memory device for robustness against random power failure events that typically causes file system corruption. In addition, the mediator 1102 may include battery management circuits that allow it to perform its own uninterruptible power supply functionality.

The mediator 1102 may include multiple 10/100 Base T Ethernet ports for network connections, an RJ-11 port for connecting to an internal modem, a console port, RS-232 serial port, four RS-485 serial ports (configurable as terminated/non-terminated), an IrDA infrared data link port to allow communications with a PDA, pulse counter/frequency counter/digital inputs, Dallas 1-Wire ports, universal serial bus ports, solid-state single pole normally open relay outputs, with 0-60V, 1.0A AC/2.0A DC outputs, opto-isolated, or other interfaces.

The mediator 1102 may include 512 MB or more of compact flash memory, expandable to up to 2GB externally, which acts as a solid-state hard drive, and 512 MB or more of SDRAM. After power-up, the mediator 1102 Framework Software application loads from Flash into RAM and executes from RAM. The main board has a special header which provides some in-circuit emulation capability and the ability to program its own boot load flash without removing the EEPROM chip.

**The** mediator 1102 may operate on 24VAC power provided by a customer-supplied 24 VAC class 2 transformer (typically 40 VA), and may include defenses against power disruptions and failures. For example, the mediator 1102 may include a large capacitor with enough capacity to withstand two or three missing 60-cycle power cycles. In addition, the mediator 1102 may include provisions for an optional external gel cell or lead-acid battery. The battery may be trickle-charged continually and used as an onboard UPS, so that the system can continue to operate in the event of brownouts or power loss.

The mediator 1102 Software includes:
The mediator 1102 Framework Software application
The mediator 1102 Operating Environment (MOE)
The mediator 1102 Framework Software
The mediator 1102 Framework Software provides the core functionality of the mediator 1102 system. This includes:
   Assembling a running system from configuration data
   Getting and setting values
   Processing raw data
   Presenting data from disparate stheces in a uniform format
   Making data easily available to end users
   Providing services such as data logging and HTTP services
   Providing an environment for custom system configuration
   Providing an environment for developing custom solutions
   Providing both REST and XML-RPC based Web-services for external value add applications.

The mediator 1102 Framework Software is written in Python, an open-source programming language that supports robust, object-oriented applications. One feature of the mediator 1102 Framework architecture is dynamic system configuration. Conventional programs are monolithic in design, which means they would contain all of the code required for any possible site configuration. Much of the program may not be applicable to a particular site, but it would be loaded and run nonetheless. Dynamic system configuration facilitates the Framework to assemble a system that includes only the program code that a particular site configuration actually requires.

The mediator 1102 Framework provides the structure on which it builds the system that represents a site. It also provides the functionality to assemble the system from configuration data. It then provides the operating environment in which that system runs. As a result, the mediator 1102 facilitates any site configuration to be represented in software. In addition, it facilitates an existing system to be modified or extended easily and quickly, without shutting it down.

The mediator 1102 Operating Environment (MOE) system software is based on a Red Hat 2.4 series Linux kernel and a Red Hat-derived user-space, thereby providing true multi-tasking, multi-threads, virtual memory, shared libraries, demand loading, shared copy-on-write executables, sophisticated memory management, loadable device driver modules, and robust TCP/IP networking. The MOE facilitates the mediator 1102 to run multiple services and protocols simultaneously and still respond to events, such as energy usage curtailment signals, generated in the network environment. In the event of a system failure, the Mediator may use its full journaling file system restores the data on the disk to its pre-failure configuration. It also recovers unsaved data and stores it in the location where it would have gone if the system had not failed, making it an important feature for mission-critical applications.

The mediator 1102 provides firewall capability by means of the Netfilter packet-filtering subsystem built into the Linux operating system. The Secure Shell (SSH) protocol defines programs that allow users to securely log onto another computer over a network, execute commands remotely, and move files between machines. It provides strong authentication and secure communications over insecure networks such as the Internet. The mediator 1102 uses the OpenSSH implementation of the SSH protocol specification. SSL (Secure Socket Layer): the Operating System running on the mediator 1102 is configured to implement Secure Socket Layer (SSL). SSL is an open protocol to allow encrypted transmission of data between Web browsers and Web servers. SSL is based on public key encryption technology and provides data encryption, server authentication, message integrity, and client authentication for TCP/IP connections. IPSec: The mediator 1102 may use FreeS/WAN, an implementation of the IPSec protocol suite. The IPSec protocols provide security in network-to-network connections. It provides access control, data integrity, authentication, and confidentiality, allowing secure private communication across insecure public networks such as the Internet.

The mediator 1102 may keep logs of the following:
All system and kernei messages.

Each network connection, its originating IP address, length, and other data about attempts to enter the system.

Remote users file requests.

Repeated authentication failures.

In addition, the mediator 1102 may be configured with intrusion detection tools that take user-specified actions such as setting off an alarm when unauthorized entry is attempted.

The Mediator™'s MOE supports a broad range of networking capabilities, including:
Integrated Web server with HTTP, CGI, SSI, Secure Socket Layer (SSL) and HTTPS protocol support
Secure Shell (SSH) and Secure Copy (SCP)
Integrated IPSec (Virtual Private Networking) functionality
Routing
Packet filter firewall
Packet logging
Intrusion Detection
Quality of Service (QoS)
Network Address Translation (NAT)
Dynamic Host Configuration Protocol (DHCP)
Simple Network Management Protocol (SNMP)
The mediator 1102 provides a flexible array of IP-based services that can be used to integrate the various automation systems deployed within an Enterprise. These services include (but are not limited to) the following:
   HTTP (AJAX): On-board tools allow the user to generate custom Web-pages that dynamically update and may be used to represent various equipment. This includes the ability to embed a Flash-based widget that can chart local log data.
   XML-RPC: Large Enterprises typically have requirements for custom applications. The mediator 1102 provides an open XML-RPC based API that facilitates interaction with third-party applications.
   MeterMail Exporter: The mediator 1102 supports the PML EEM iog transport protocol, MeterMail. This facilitates information from a variety of meters to be incorporated into this application.
   SNMP: Simple Network Management Protocol used in IT and Telephony communications.
   RSS: Alarm\Event information may be subscribed to via RSS syndication.
   FTP: Log information may be periodically sent to FTP servers.
   SMTP: Alarm information may also be communicated via SMTP.

The system may store and generate 3-D renderings of buildings or building floor plans, e.g., modeled in Google SketchUp, imported into Google Warehouse, and accessed via Google Earth (GE). A geospatially accurate representation of a real estate portfolio coupled with customizable information overlays could potentially be implemented in the system as part of a building Management Intranet.

The system solution may facilitate Automatic Demand Response (ADR) offered by many utility providers. For example, Mediator™® listens 24/7 on the PGE DRAS server for pending ADR events. The mediator 1102 consumes the utilities ADR Web service, integrating this DR signal into mediator 1102 resident application logic and policies then driving building systems at the facility level like HVAC and lighting into reset, set point changes and dimming and /or turning off selected lighting loads. Mediator™® also provides M&V and ADR results via a PDF log FTP or other wise sent to the utility upon request and /or on board configuration.

The system's maintenance component may provide an open architecture to other applications and systems via SQL connections, CVS extracts, online viewing, FTP and Web services methods (XML/SOAP). This facilitates integration of prioritized analysis results into the company' business rules, dashboard, work order systems, or even payment system for payment control purposes, e.g., technician payments cannot be released until faults on the equipments they are responsible for are fixed. This platform is also tightly integrated with Mediator™® to utilize its MPX feature, enabling integration with energy, building, facility service, asset & iT management applications such as CMMS, Archibus, MAXIMO®, SAP, Oracle, etc.

The mediator 1102 may support the major communications protocols most widely used in the Building Automation industry, but others may be developed and implemented.

The following is a list of the building management protocols and drivers that the mediator 1102 may implement

| | |
|---|---|
| Modbus RTU | Carrier Dataport/Datalink |
| Modbus TCP | CSI MR |
| BACnet/Ethernet | CSI I-NET |
| BACnet/IP | Staefa SmartI and SmartII |
| Trane proprietary BACnet objects | YorkTalk |
| Barber Colman ASD protocol | McQuay Microtech #1/#2 |
| Trane TRMI Tracer 100 Interface | Barrington Microstar I and Microstar II |
| Module (COM3) | HSQ Misenet Field Interface Emulator |
| Trane TRMS Tracer Summit Interface | DNP3 |
| Module. (COM4) | Crossbow Wireless Sensor Network and |
| Johnson Controls Metasys N1 | motes |
| Johnson Controls Metasys N2 | Point Six wireless host protocol |
| Dallas 1-Wire | LonTalk |
| PPP (Point-to-Point Protocol) | RZ Net |
| Andover proprietary | Capstone Micro-turbine protocol |
| Capstone proprietary | Caterpillar CCM protocol |
| Point Six proprietary | Generic SOAP Host |
| Siemens proprietary | ASI Controls VAV, Fan Coil, Heat Pump, |
| Clipsal C-Bus | AHU and ASIC 2 devices |

### MEDIATOR™ OMEGA CONNECTION AND ANALYSIS TOOLS

The system 100 may include an Event Manager that provides a complete Web-based alarm management system that provides the means to manage alarms from cradle to grave. Every mediator 1102 within a configured cloud reports all locally identified alarm related events to each other, which creates a distributed, fault tolerant alarm management system that still has the ability to present a system wide consistent view. Alarms may be communicated to a number of parties via RSS, e-mail, SMS and similar mechanisms.

Security Manager facilitates the ability to control user access to the system, including adding/removing users and passwords to the system, configuring and assigning roles and associating policies with those roles.

Trend Manager facilitates the integrator to add, configure logs in Flash graphics, so that end users can view the data and save it to a spreadsheet.

Web Scheduler is a complete scheduling engine for editing and maintaining schedules.

Web Site Builder facilitates the integrator to configure the look and feel of the end-user application. The integrator can use it to link pages together, create buttons, drop-down menus and other graphical elements in the GUI, choose colors, upload graphics, videos, and other elements for home page, etc.

Web Express facilitates the integrator to create Web pages on the fly. It provides widgets and other tools to graphically display information from the mediator 1102 - point values, logs, etc. In addition, the mediator 1102 has an onboard image library containing thousands of images that can be used in creating Web pages.

Configuration Tool is the tool the integrator uses to configure the mediator 1102 to communicate with the devices, equipment, and systems in a facility.

Node Browser provides the integrator with a graphic view of the nodes in an installation.

Cisco IPT is a tool for configuring the Cisco voice-over-IP telephone. It facilitates authorized users to communicate with the mediator 1102 over the telephone, and to view and change settings, logs, alarms, and other information from the Mediator™. The mediator 1102 may further include an enterprise connectivity system, such as Web Point.

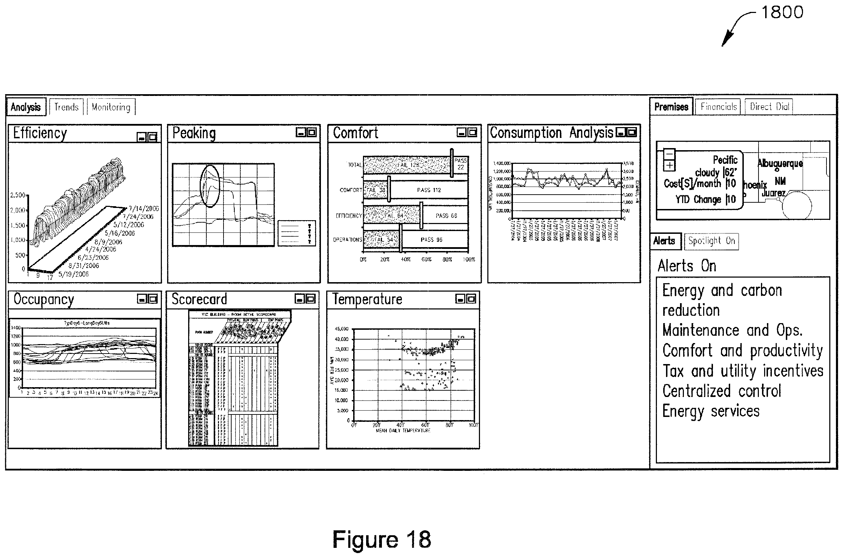

Figure 18 shows dashboard screenshots 1800 for reporting screens that the system may generate.

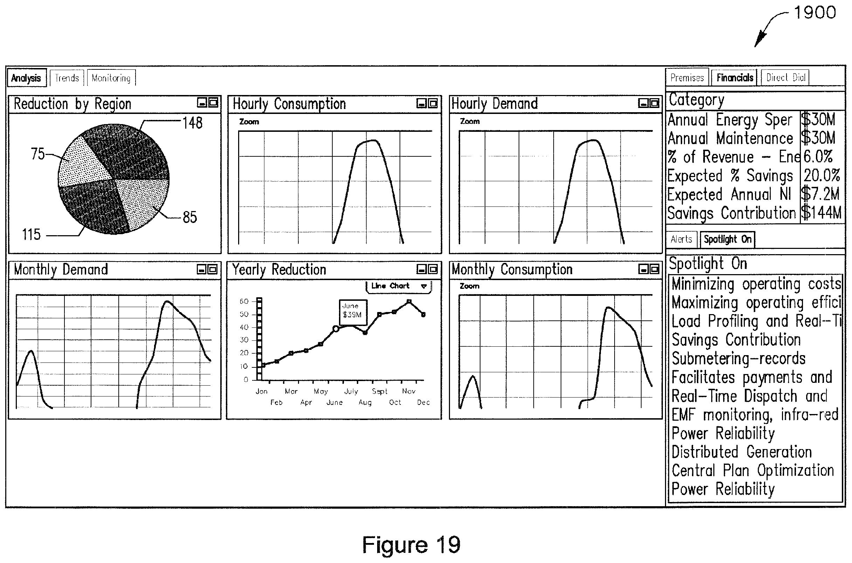

Figure 19 shows a dashboard screenshot for an analytics reporting screen 1900 that the system may generate.

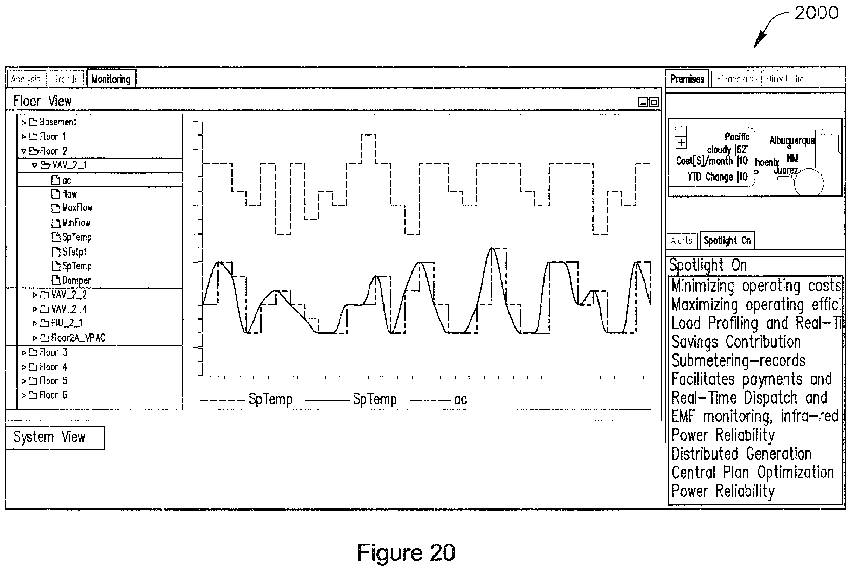

Figure 20 shows a dashboard screenshot for a trend reporting screen 2000 that the system may generate.

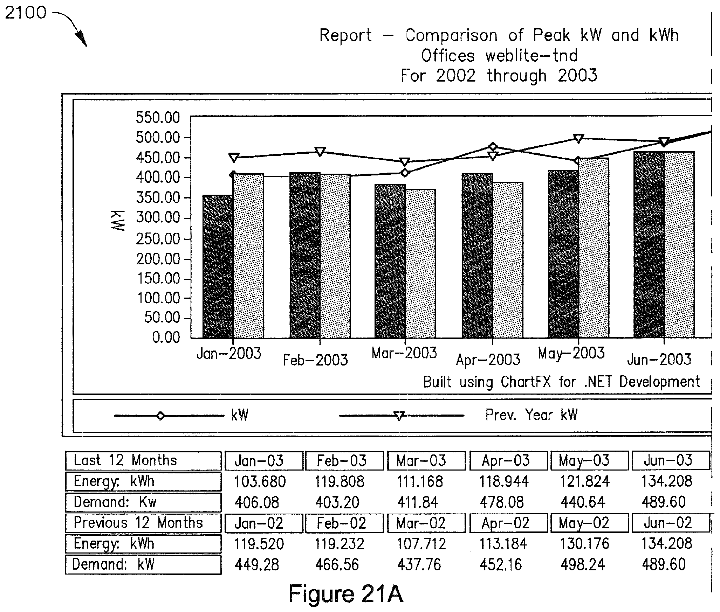

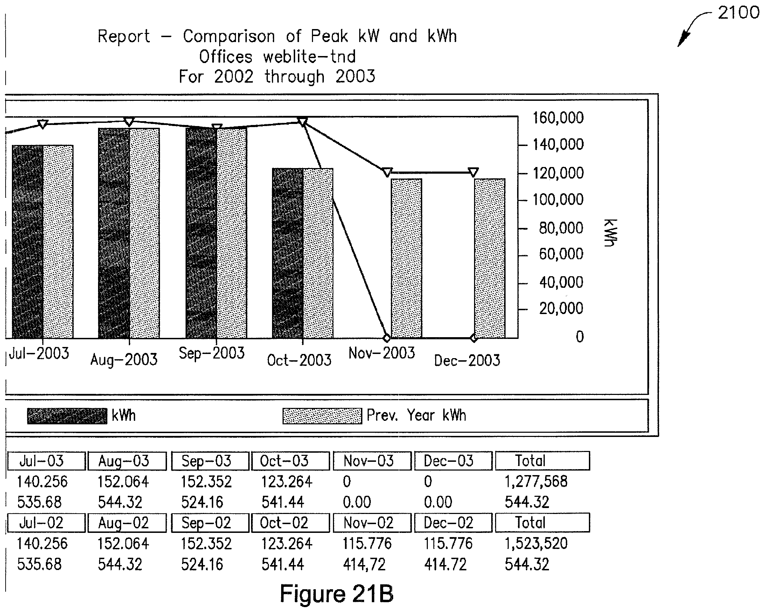

Figure 21 shows a dashboard screenshot for a monitoring reporting screen 2100 of historical energy comparison that the system may generate.

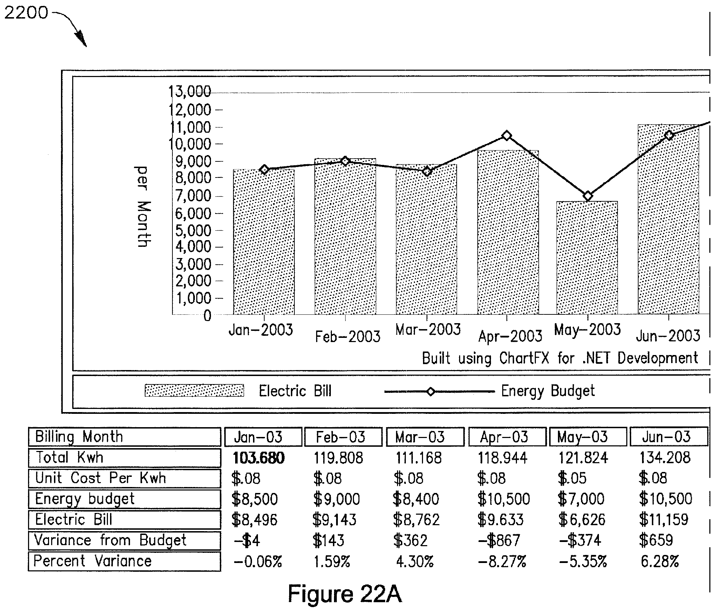

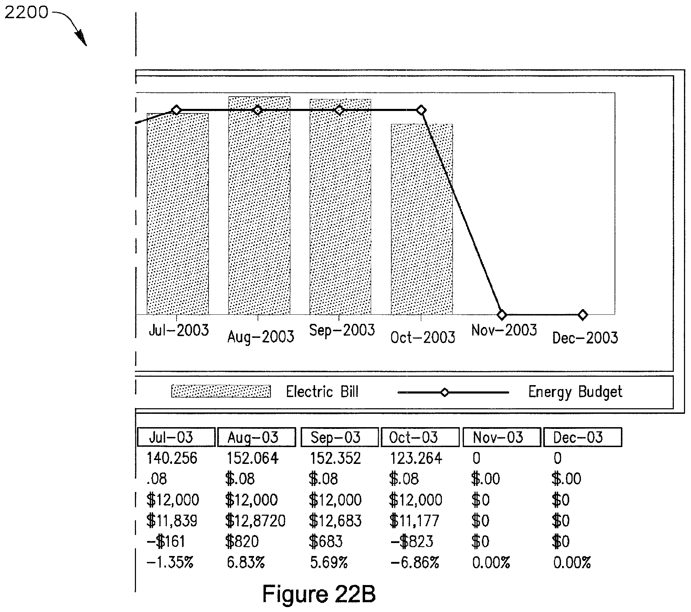

Figure 22 shows a dashboard screenshot for a monitoring reporting screen 2200 of actual energy usage versus budged amount that the system may generate.

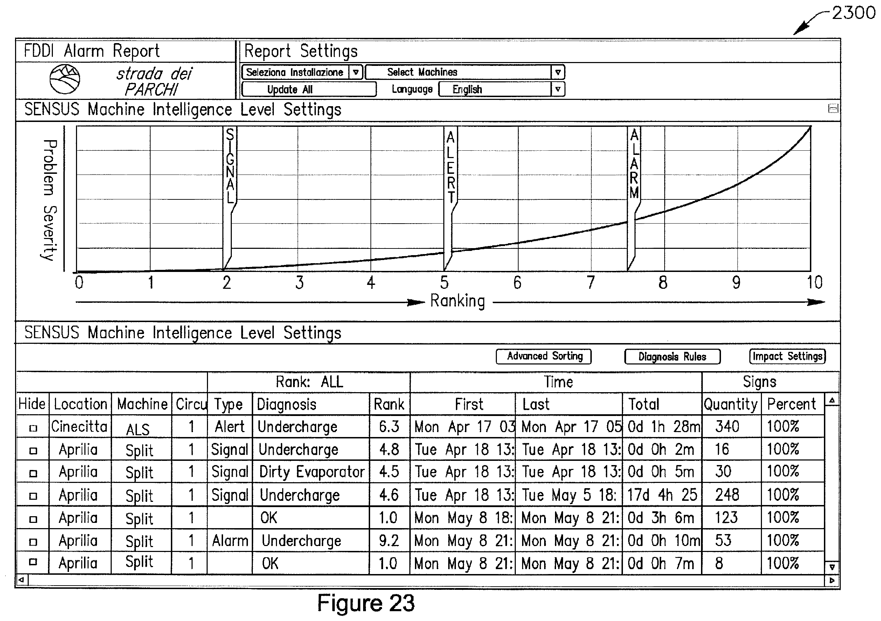

Figure 23 shows a dashboard screenshot for a monitoring reporting screen 2300 of Interactive Automated Fault Detection and Diagnosis that the system may generate.

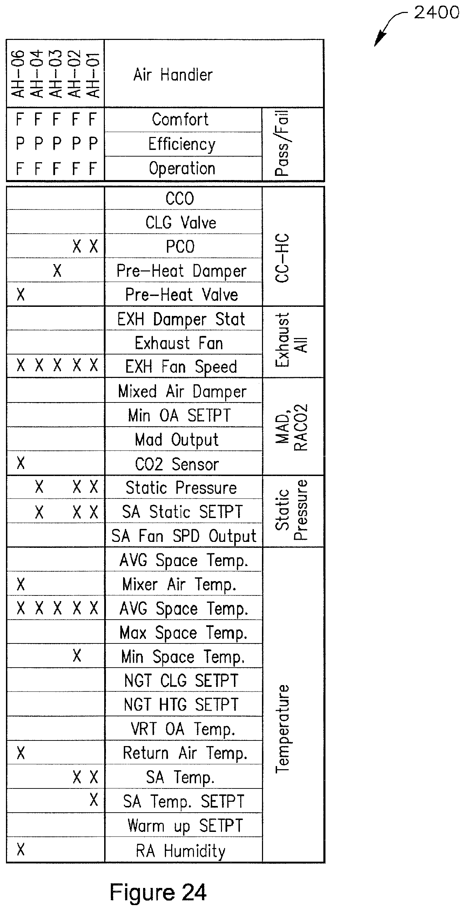

Figure 24 shows a sample reporting format for measuring and optimizing comfort, efficiency, and operations within each building space, including reporting on operations of building equipment and systems, specifically regarding Analysis Focused on Equipment Performance 2400.

Figure 25 shows one example of a particular machine 2500 that implements a system for building energy analysis. The machine 2500 may implement all or part of the network operations center 1106, for example. The machine 2500 includes a processor 2502, a memory 2504, and a display 2506. A communication interface 2508 connects the machine 2500 to energy data sources 2510, such as building sensors, utility company meters, weather centers, mediator devices, and other data sources. The display 2506 may present reports 2512, such as those described above or below, either locally or remotely to an operator interacting with the machine 2500.

The machine 2500 also includes an energy database 2514. The energy database 2514 may store any data that the machine 2500 processes. As examples, the energy database 2514 may store sensor samples 2516 (e.g., samples of energy consumption or performance of building energy consuming devices), energy metrics 2518 (e.g., measured or computed metrics, optionally based on energy KPIs), utility bill data 2520 (e.g., cost per unit energy, energy consumed, total cost, and date), weather data 2522 (e.g., temperature ranges, dates, expected temperature or temperature variations at any desired interval), or other data that helps the machine 2500 analyze energy consumption, cost, or history.

The memory 2504 may store program instructions or other logic for execution by the processor 2502. For example, the memory 2504 may store energy analysis programs 2524 and energy reporting programs 2526. The energy analysis programs 2524 may gather, analyze, and otherwise process the sensor samples 2516 or other energy data (e.g., to produce control recommendations for building systems or identify data points for further study and analysis). The energy reporting programs 2526 may generate user interfaces including dashboards, charts, graphs, text displays, or other reporting information as described above with regard to Figures 18 - 24, or as noted below.

The machine 2500 may perform an energy analysis (e.g., as part of the network operations center) on the energy data in the energy database 2514 to produce an analysis result. To that end, as one example, the machine 2500 may include in the memory 2504 balance point determination logic 2528 (e.g., as one of the energy analysis programs 2524). The balance point determination logic 2528 searches for a set of multiple balance points (e.g., a pair of balance points) in the energy data. In one implementation, the energy data that is searched are triples of: date, temperature, and measured consumption data 2546, obtained from one or more energy data sources over any desired date range, such as from a building under analysis and a weather information center.

The balance points may include a Heating Balance Point (HBP) 2530 and a Cooling Balance Point (CBP) 2532 to help identify the number of heating degree days (HDDs) and cooling degree days (CDDs). The HBP 2530 may be interpreted as the temperature above which the building is not heating, while the CBP 2532 may be interpreted as the temperature below which the building is not cooling. In one model, the building is neither heating nor cooling between the HBP 2530 and the CBP 2532. Thus, identifying both the HBP 2530 and CBP 2532 may significantly increase the accuracy of the count of the number of HDDs and CDDs for the building, particularly as compared to finding a single balance point for both heating and cooling, or compared to assuming a standard and usually inaccurate balance point (e.g., 65 degrees F). The increased accuracy in the determination of HDDs and CDDs has positive effects in downstream technical analyses, such as obtaining a more accurate determination of the weather load on the building, and therefore a more accurate regression model of how the building responds to weather load. The more accurate regression model means more accurate measurement and verification of savings obtained when energy management strategies are implemented based on the downstream analyses.

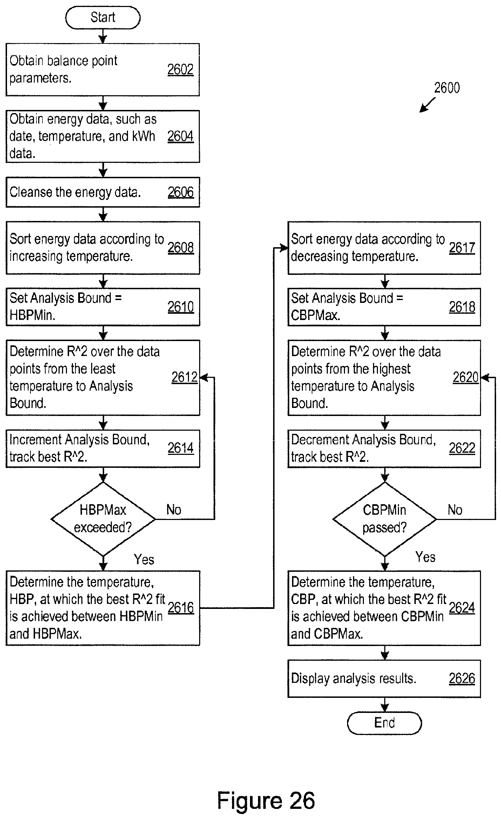

In particular, the balance point determination logic 2528 may implement the logic 2600 shown in Figure 26. The logic 2600 may be implemented as executable instructions for the processor 2502, to determine either or both of a HBP 2530 and a CBP 2532 (i.e., as a computer implemented method). The balance point determination logic 2528 may obtain (2602) balance point parameters 2534 including, as examples, those shown below in Table Balance Point Parameters.

The balance point determination logic 2528 may obtain the balance point parameters 2534 from operator input, from pre-defined parameters stored in the memory 2504, or in other ways. With regard to the search window parameters, alternatively the balance point determination logic 2528 may search for the HBP 2530 and CBP 2532 over the entire temperature range (or some pre-defined portion of the whole range) represented in the energy data obtained for analysis.

| Table: Balance Point Parameters | |
|---|---|
| Parameter | Comment |
| HBPMin | The lower end of the search window for the heating balance point, e.g., in degrees F or C. |
| HBPMax | The upper end of the search window for the heating balance point, e.g., in degrees F or C. |
| CBPMin | The lower end of the search window for the cooling balance point, e.g., in degrees F or C. |
| CBPMax | The upper end of the search window for the cooling balance point, e.g., in degrees F or C. |
| R^2Min | The minimum correlation coefficient value that the balance point determination logic 2528 will consider in its search for a HBP or CBP. Thus, R^2 values below R^2Min may be discarded or not considered in the search for the best fit R^2 in the analysis discussed below. In other implementations, the balance point determination logic 2528 may employ additional or different statistical tests or variables to determine which regression models to consider in its search for the HBP and CBP. Alternatively, all R^2 values may be considered. |
| Temperature Delta | A temperature increment (for the HBP) or decrement (for the CBP) that defines the number or size of steps through the heating balance point search window or cooling balance point search window. For example: an increment of 2 degrees and a decrement of 3 degrees, or an increment and a decrement of 1 degree. |
| Data Cleansing Parameters | Parameters used to identify and remove outlier data points in the energy data before searching for the HBP or CBP. For example, a number (e.g., 1.5) of standard deviations from the mean temperature or mean energy consumption that defines outlier data points in temperature or energy consumption to be removed. |

The balance point determination logic 2528 obtains energy data from the building under analysis (2604). As an example, the energy data may include date, temperature, and energy consumption (e.g., kWh) data for each date. The energy data may instead be kBTU consumption, occupancy, wind speed, relative humidity, or other energy data. The energy data may extend over any desired time period, such as one year, one quarter, or one month, and may be collected at any desired interval (e.g., every 15 minutes, 30 minutes, 60 minutes, or other interval), with the data subjected to any desired mathematical treatment (e.g., averaging of the data, or discarding outlier data) to obtain the energy data for a given date.

The balance point determination logic 2528 optionally cleanses the energy data prior to analysis (2606). For example, the balance point determination logic 2528 may remove from consideration from the energy data: weekend data points, outlier data points, data points with errors in date or energy consumption data, or other non-representative data points. The outlier data points may be data points beyond a predefined outlier threshold (e.g., 2 standard deviations away from the mean) input as a balance point parameter. More specifically, the outlier data points may be determined by finding the average and standard deviation of the input data (e.g., the average of weekdays after data with invalid dates and energy data are discarded), then removing data points more than a pre-defined or operator specified multiple of the standard deviation away from the average).

Given the input energy data, the balance point determination logic 2528 performs an analysis (e.g., a regression analysis) to determine a balance point set. The balance point set may include the HBP 2530 and the CBP 2532, as an example. One exemplary analysis is described below with continued reference to Figure 26. In the example given below, the balance point determination logic 2528 uses regression analysis to determine R^2 values. However, it is noted that the balance point determination logic 2528 may apply additional or different statistical tests or variables in its search of the energy data to find the HBP 2530 and CBP 2532.

In particular, the balance point determination logic 2528 sorts the energy data according to temperature (e.g., in ascending order) (2608). An analysis bound, for finding the HBP 2530, is initially set to HBPMin (2610). For all the data points starting from the least temperature to the data point corresponding to HBPMin, the balance point determination logic 2528 determines the square of the correlation coefficient, R^2, between temperature and energy consumption for that set of data points (2612). The balance point determination logic 2528 may determine the correlation coefficient by, in general, performing a linear regression using the least squares method, with 'n' independent variables and one dependent variable. The balance point determination logic 2528 then increments the analysis bound (e.g., by 1 degree, or another pre-defined temperature delta) and if HBPMax has not yet been exceeded, the balance point determination logic 2528 determines the square of the correlation coefficient, R^2, between temperature and energy consumption for all data points from the least temperature to the incremented analysis bound. This way, the balance point determination logic 2528 returns to (2612) repeatedly to determine the next R^2 over the new set of data points extending to the incremented analysis bound until the incremented analysis bound reaches HBPMax. The balance point determination logic 2528 may save, display, analyze, plot or otherwise manipulate any or all of the R^2 values determined during the analysis. Once the balance point determination logic 2528 has determined the R^2 values at each increment delta over the window between HBPMin to HBPMax, the balance point determination logic 2528 determines the temperature at which the best R^2 fit is achieved (2616), e.g., as determined by the greatest R^2 value. That temperature is designated the HBP 2530.

With regard to the CBP 2532, the balance point determination logic sorts the energy data according to decreasing temperature (2617) and sets a new analysis bound equal to CBPMax (2618). For the data points starting from the highest temperature to the data point corresponding to CBPMax, the balance point determination logic 2528 determines the square of the correlation coefficient, R^2, between temperature and energy consumption, for that set of data points (2620). The balance point determination logic 2528 then decrements the analysis bound (e.g., by 1 degree, or another pre-defined temperature delta) and if CBPMin has not yet been reached, the balance point determination logic 2528 determines the square of the correlation coefficient, R^2, between temperature and energy consumption for all data points from the highest temperature to the decremented analysis bound. This way, the balance point determination logic 2528 returns to (2620) repeatedly to determine the next R^2 over the new set of data points extending to the decremented analysis bound until the decremented analysis bound reaches CBPMin. The balance point determination logic 2528 may save, display, analyze, plot or otherwise manipulate any or all of the R^2 values determined during the analysis. Once the determination logic 2528 determines the temperature at which the best R^2 fit is achieved (2624), e.g., as determined by the greatest R^2 value. That temperature is designated the CBP 2530. The HBP and CBP may be displayed, saved, or otherwise manipulated (2626).

Obtaining the balance point parameters noted above helps to focus the search for the balance points in specific windows. The results are faster and more efficient searches for the balance points.

Once the balance point determination logic 2528 has obtained the HBP 2530 and CBP 2532, the machine 2500 may apply the HBP 2530 and CBP 2532 in many different types of analyses and reporting. For example, the measurement and verification (M&V) logic 2548 (or the balance point determination logic 2528) may calculate the number of HDD and CDD, present analysis plots on the display 2506, or take other actions. For example, the M&V logic 2548 may: plot the CBPMin to CBPMax with corresponding R^2; plot the HBPMin to HBPMax with corresponding R^2; determine whether any day was a CDD according to the CDD test: Min(Temperature recorded that day - CBP, 0) that returns non-zero for a CDD; determine whether any day was a HDD according to the HDD test: Min(HBP - Temperature recorded that day, 0) that returns non-zero for a HDD; extract the month from the date field for each data point (row) and sum the kWh consumption, kBTU consumption, CDD, HDD and the number of days in the data set belonging to each month and store or display the monthly figures; for monthly CDD and HDD, calculate Log CDD, Log HDD, CDD^2, HDD^2 and store or display the values for each month; for each month, calculate average Occupancy, Relative Humidity, Wind Speed, Global Solar Radiation and store or display these for each month; or output other analysis result.

, The M&V logic 2548 may define, execute, and display the resuits of regression analyses, given, as examples, the number of CDD or HDD, the HBP 2530 or CBP 2532, or other parameters. To that end, the M&V logic 2548 may obtain (e.g., from operator input or from pre-defined parameters in the memory 2504) M&V parameters 2550. The M&V parameters 2550 may include, as examples, company name, building name, an (optionally) unique building identifier, analysis start date, analysis end date, or other parameters. Additional M&V parameters 2550 may include: user-specified independent variables for use in regression analyses, such as CDD, HDD, number of days, CDD^2, HDD^2, Log CDD, Log HDD, occupancy, relative humidity, wind speed, and global solar radiation; and user-specified dependent variables for use in the regression analyses, such as kWh consumption, kBTU (i.e., natural gas) consumption.. Using the M&V parameters 2550, the M&V logic 2548 may calculate, store, display or otherwise perform a user-specified regression analysis. In particular, the M&V logic 2548 may determine the 'n' independent variables specified in the M&V parameters 2550, and from 'i'=1 to n, take 'i' of the variables at a time and create a regression model with the 'i' variables as independent variables and kWh (or kBTU, or other energy measurement chosen) as the dependent variable. Each of the regression models created may use a combination (subset) of the overall 'n' independent variables chosen. The M&V logic 2548 runs the regression based on the data (e.g., monthly, weekly, or daily data) for the dependent and independent variables, and may determine and store the R^2 value, significance F (e.g., from an F-test), or any other variables or test results, and the corresponding intercept and coefficient values for each of the 'i' independent variables.

The M&V logic 2548 may, if desired, for each independent variable chosen, disallow the certain pairs of variables in the regression analysis (e.g., transformations of the same variable may not be chosen together in the same regression model). As examples:
CDD and CDD^2 together may be disallowed;
CDD and Log CDD together may be disallowed;
Log CDD and CDD^2 together may be disallowed;
HDD and HDD^2 together may be disallowed;
HDD and Log HDD together may be disallowed;
Log HDD and HDD^2 together may be disallowed.

Once the combinations of regression outputs for 'i'=1 to n have been generated and stored, the M&V logic 2548 may sort the R^2 values for the regressions (e.g., by decreasing R^2) and output on the display 2506 the top results (e.g., the top 1, 2, or 3 results). Each result may, for example, report the R^2, Significance F, intercept and coefficients for each independent variable in the top regression results. Additionally, the M&V logic 2548, may use the intercept and the coefficients for each independent variable to create the regression equation for each of the top regression outputs.

In addition to those noted above, the M&V logic 2548 may generate a wide variety of analysis results as outputs on the display 2506. Examples are given below. With regard to the first two examples, the M&V logic 2548 may generate the displays using information obtained from the balance point determination logic 2528. Alternatively or additionally, the balance point determination logic 2528 may display the charts described using the information that it obtains in its analysis to find the balance points.
1) a line chart showing temperature varying from HBPMin to HBPMax on the X axis and R^2 (the square of correlation for temperature and kWh) corresponding to each temperature on the Y axis;
2) a line chart showing temperature varying from CBPMin to CBPMax on the X axis and R^2 (the square of correlation for temperature and kWh) corresponding to each temperature on the Y axis;
3) tables containing the underlying data used to generate above two charts;
4) a table showing monthly date in any desired (e.g., mm/yyyy) format, kWh consumption, kBTU consumption, monthly CDD, monthly HDD, monthly CDD^2, Log CDD, Log HDD, HDD^2, monthly average Occupancy, monthly average Relative Humidity, monthly average Wind Speed, monthly average Global Solar Radiation, or other variables; and
5) a table which shows a summary of the top regression outputs, including R^2, Significance F, Regression Equation, Intercept and coefficients for each independent variable for each regression output.

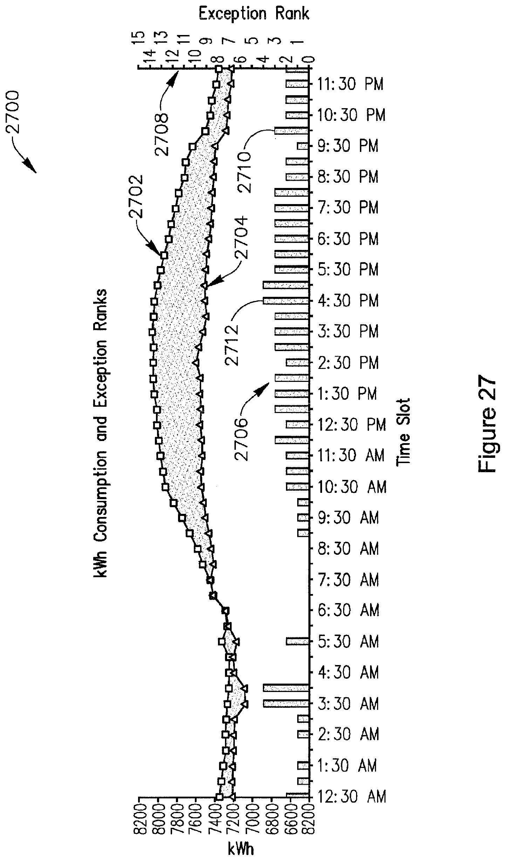

The machine 2500 may additionally or alternatively include comparison logic 2544 (e.g., as one of the energy analysis programs 2524). The comparison logic 2544 may include instructions that when executed by the processor 2502 cause the processor 2502 to perform a kilowatt hour consumption and exception rank analysis, for example. One example of a comparison analysis 2700 that results from the comparison logic 2544 is shown in Figure 27. The comparison analysis 2700 extends in 30 minute intervals over an entire day for a particular building under analysis, but the comparison logic 2544 may perform analyses over shorter or longer time periods at different intervals. Furthermore, the comparison may be done with respect to a single building (e.g., to compare energy consumption data historically for the building), or with respect to multiple buildings (e.g., to compare a building under analysis to a different control building). In addition, there may be multiple buildings in a control building group that each contribute energy data for defining (e.g., by averaging or according to another statistical treatment) the control building data described below.

The comparison logic 2544 may compare control building data 2702 to a user-defined standard 2704. In the example shown in Figure 27, the control building data 2702 is daily average kWh consumption measured at 30 minute intervals over 15 different days in July, and the user-defined data is 2704 is daily average kWh consumption at 30 minute intervals over the month of January 2009 for a particular building under analysis. The control building data 2702 and user-defined data 2704 may be data points over any other time intervals, time spans, or obtained from any number of different buildings, or from the same building. Further, either the control building data 2702, the user-defined data 2704, or both, may capture desired or expected levels of building performance, may represent actually measured and optionally statistically treated (e.g., averaged) consumption data from one or more buildings, or may represent other data automatically obtained or input by an operator. Thus, as another example, the control building data 2702 may be individual operator specified data points at 30 minute intervals that provide a baseline for comparison. The constitution of the control building data 2702 and the user-defined data 2704 may vary widely, as examples: average consumption at any desired interval on weekdays over a pre-defined time period (e.g., one week, three months, or one year), optionally excluding holidays, and/or outlier data points; average consumption at any desired interval on weekends over a predefined time period; average consumption at any desired interval on holidays over a predefined time period; or other consumption data.

For the example shown in Figure 27, the comparison logic 2544 performs a comparison respect to energy consumption measured in kWh. However, other energy measurements may be used, such as cubic feet of natural gas consumption, gallons of water used, or measurements of other types of energy or resources.

The comparison logic 2544 may determine and display exceptions 2706. The exceptions 2706 may identify noteworthy variations in consumption data for further review or analysis. Figure 27 illustrates an example in which 16 exception ranks 2708 are defined. As specific examples, the exception 2710 indicates a rank 3 exception and the exception 2712 indicates a rank 4 exception. The comparison logic 2544 may analyze the building control data 2702, the user-defined data 2704, or both to determine exceptions at any desired time interval, such as every second, every minute, every 15 minutes or every 30 minutes.

The comparison logic 2544 may determine an exception rank for any interval in many different ways. For example, the exception rank may apply to the user-defined data 2704, with exception rank assigned based on the standard deviation of the user defined data 2704 (e.g., determined at each interval). Table Exception Ranks, below, shows one example definition of the exception ranks according to windows of standard deviations of the user-defined data 2704. The comparison logic 2544 may determine additional, fewer, or different exception ranks according to additional, fewer, or different standard deviation windows, or using any other statistical criteria of interest that map the statistical criteria to one or more exception ranks.

| Table: Exception Ranks | | | | | |
|---|---|---|---|---|---|
| Rank | 1 | 2 | 3 | 4 | 5 |
| Standard Deviations from the mean | -1 to +1 | from: -1 to -1.5 and from: 1 to 1.5 | from: -1.5 to -2 and from: 1.5 to 2 | from: -2 to -2.5 and from: 2 to 2.5 | from: -2.5 to -3 and from: 2.5 to 3 |

More specifically, the comparison logic 2544 may determine the average (the control average) and standard deviation (the control standard deviation) of the energy data for each interval (e.g., the interval between 3 am and 3:30 am on a given day) in the building control data 2702. The comparison logic 2544 further determines the average (the user-defined average) of the data for each similar interval in the user-defined data 2704. The comparison logic 2544 then assigns an exception rank to the user-defined average for each interval in the user-defined data 2704 according to where the user-defined average falls within the control standard deviation determined from the building control data 2702 for the same interval. For example, in Figure 27, at 3:30 am the comparison logic 2544 determines an exception rank of 4 because the average consumption (7082.58 kWh) is between -2 and -2.5 standard deviations of the average consumption (7267.40) in the building control data 2702 in the same interval. At 3:30 pm, an exception rank of 3 applies because the average consumption (7526.81 kWh) of the user-defined data 2704 is between -1.5 and -2 standard deviations of the average consumption (8064.87) in the building control data 2702 in the same interval.

The Table Comparison Data, below, shows for the comparison analysis 2700 the analysis data at 30 minute intervals for the control building data 2702 and the user-specified data 2704, including the determined exception rank determined according to Table Exception Ranks.

| Table: Comparison Data | | | | |
|---|---|---|---|---|
| | Control Range average by time slot | User Defined Range average by time slot | Exception Rank by time slot | Difference |
| 12:30 AM | 7348.93 | 7213.00 | 2.00 | 135.93 |
| 1:00 AM | 7331.47 | 7218.42 | 1.00 | 113.05 |
| 1:30 AM | 7310.67 | 7210.65 | 1.00 | 100.02 |
| 2:00 AM | 7281.27 | 7204.10 | 0.00 | 77.17 |
| 2:30 AM | 7285.67 | 7202.52 | 1.00 | 83.15 |
| 3:00 AM | 7275.53 | 7194.45 | 1.00 | 81.08 |
| 3:30 AM | 7267.40 | 7082.58 | 4.00 | 184.82 |
| 4:00 AM | 7250.07 | 7086.48 | 4.00 | 163.58 |
| 4:30 AM | 7248.60 | 7198.90 | 0.00 | 49.70 |
| 5:00 AM | 7245.80 | 7206.10 | 0.00 | 39.70 |
| 5:30 AM | 7323.53 | 7169.90 | 2.00 | 153.63 |
| 6:00 AM | 7265.13 | 7259.00 | 0.00 | 6.13 |
| 6:30 AM | 7285.67 | 7291.13 | 0.00 | -5.46 |
| 7:00 AM | 7413.67 | 7419.35 | 0.00 | -5.69 |
| 7:30 AM | 7448.87 | 7453.87 | 0.00 | -5.00 |
| 8:00 AM | 7526.47 | 7419.16 | 0.00 | 107.31 |
| 8:30 AM | 7583.80 | 7443.19 | 0.00 | 140.61 |
| 9:00 AM | 7673.47 | 7465.71 | 1.00 | 207.76 |
| 9:30 AM | 7751.73 | 7499.58 | 1.00 | 252.15 |
| 10:00 AM | 7835.53 | 7522.03 | 1.00 | 313.50 |
| 10:30 AM | 7923.40 | 7550.65 | 2.00 | 372.75 |
| 11:00 AM | 7952.73 | 7556.00 | 2.00 | 396.73 |
| 11:30 AM | 7975.87 | 7537.77 | 2.00 | 438.09 |
| 12:00 PM | 7994.87 | 7545.10 | 3.00 | 449.77 |
| 12:30 PM | 8015.13 | 7557.58 | 2.00 | 457.55 |
| 1:00 PM | 8016.80 | 7550.87 | 3.00 | 465.93 |
| 1:30 PM | 8041.73 | 7556.03 | 3.00 | 485.70 |
| 2:00 PM | 8057.87 | 7556.29 | 3.00 | 501.58 |
| 2:30 PM | 8052.53 | 7600.32 | 2.00 | 452.21 |
| 3:00 PM | 8043.93 | 7568.87 | 3.00 | 475.06 |
| 3:30 PM | 8064.87 | 7526.81 | 3.00 | 538.06 |
| 4:00 PM | 8050.93 | 7492.26 | 3.00 | 558.68 |
| 4:30 PM | 8041.73 | 7506.42 | 4.00 | 535.31 |
| 5:00 PM | 8010.40 | 7509.71 | 4.00 | 500.69 |
| 5:30 PM | 7971.53 | 7496.00 | 3.00 | 475.53 |
| 6:00 PM | 7935.40 | 7487.13 | 3.00 | 448.27 |
| 6:30 PM | 7891.13 | 7462.32 | 3.00 | 428.81 |
| 7:00 PM | 7859.20 | 7441.35 | 3.00 | 417.85 |
| 7:30 PM | 7815.40 | 7436.06 | 3.00 | 379.34 |
| 8:00 PM | 7783.07 | 7426.45 | 3.00 | 356.62 |
| 8:30 PM | 7720.87 | 7415.61 | 2.00 | 305.25 |
| 9:00 PM | 7703.20 | 7405.29 | 2.00 | 297.91 |
| 9:30 PM | 7628.07 | 7392.23 | 1.00 | 235.84 |
| 10:00 PM | 7492.53 | 7280.90 | 3.00 | 211.63 |
| 10:30 PM | 7442.33 | 7267.32 | 2.00 | 175.01 |
| 11:00 PM | 7423.47 | 7257.65 | 2.00 | 165.82 |
| 11:30 PM | 7371.53 | 7224.42 | 2.00 | 147.11 |
| 12:00 AM | 7349.53 | 7219.74 | 2.00 | 129.79 |
| Total KWH | 367583.33 | 354587.29 | 3.00 | 12996.04 |

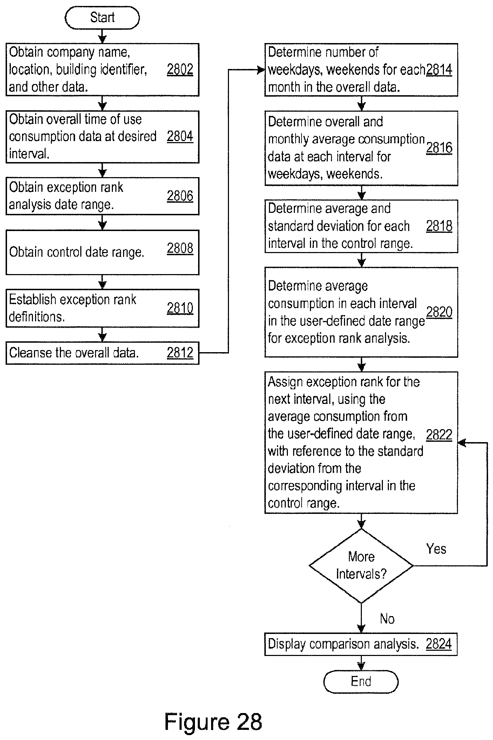

Figure 28 shows the logic that the comparison logic 2544 may implement, e.g., as processor executable instructions (i.e., as a computer implemented method). The comparison logic 2544 obtains background information, such as company name, building and company location, an (optionally) unique building identifier, or other data (2802). The comparison logic 2544 gathers overall time of use consumption data at any desired interval (e.g., every 30 minutes) (2804). The operator may specify a date range for exception rank analysis (2806) and for the control range (2808). For example, the operator may specify a particular month in 2006 as the control range, and a particular month in 2010 as the date range for exception rank analysis. Optionally, the operator may directly specify the consumption data for either the control range or exception rank analysis range.

The comparison logic 2544 obtains or establishes exception rank definitions (2810). Examples of exception rank definitions are shown in Table: Exception Ranks, but the definitions may vary widely in implementation to take into consideration any statistical parameter desired. The comparison logic 2544 optionally cleanses any of the input consumption data (2812). To that end, the comparison logic 2544 may remove data rows for which no consumption data is available, for which erroneous data is present, or for which the consumption data is anomalous (e.g., exceeding the mean consumption data by more than a pre-defined threshold).

The exception analysis may be run against all the data, weekdays, weekends, holidays, or any other subset of the overall data. Thus, the comparison logic 2544 identifies and determines the number of weekdays, weekends, holidays, or other particular days in the overall data (2814). Similarly, the comparison logic 2544 determines overall and monthly average consumption data at each interval for weekdays, weekends, holiday, and all days in each month (2816).

For each interval in the control range (e.g., daily, every 30 minutes), the comparison logic 2544 determines the average and standard deviation of the data for that interval (2818). Similarly, the comparison logic 2544 determines the average consumption in each interval in the user-defined date range for the exception rank analysis (2820). The comparison logic 2544, with reference to the exception rank definitions, assigns an exception rank for each interval, using the average consumption from the user-defined date range with reference to the average and standard deviation determined form the corresponding interval in the control range (2822). The comparison logic 2544 may generate and display the resulting comparison analysis 2700 (2824). While Figure 27 shows an analysis of daily consumption at 30 minute intervals, the comparison logic 2544 may analyze other time windows at other intervals (e.g., one day intervals over one month, or one day intervals over one year).

Exception ranks may be determined in ways other than that described above, however. As another example, the comparison logic 2544 may determine the exception rank according to the magnitude of the difference in consumption between the control building data 2702 and the user-defined data 2704, with individual thresholds or ranges defined to determine which difference magnitude maps to which exception rank. Furthermore, the difference may be shaded or otherwise highlighted in the comparison analysis 2700 to help visualize the difference.

The machine 2500 may employ the comparison analysis 2700 to rank or gauge how well a building is performing. The ranking may be output on the display 2506 as an analysis result. For example, a building with more than a threshold number of exceptions of greater than a pre-defined exception rank (or some other function of the exception ranks) may be flagged and displayed as a building that needs special attention with regard to its energy consumption. To that end, the comparison logic 2544 may implement any desired ranking rules based on the comparison analysis 2700 to determine how well a building is performing, and responsively take action, e.g., by notifying a building supervisor, outputting notification or warning messages on the display 2506, or taking other action when the rule fires.

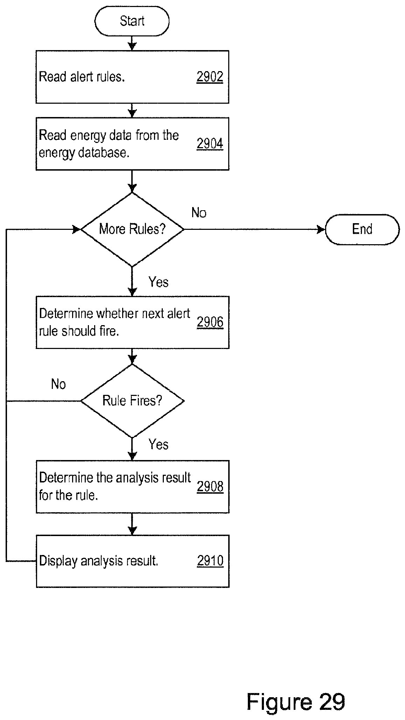

In addition, the machine 2500 may implement building level alerts. The alerts may be defined in the memory 2504 using alert rules 2536. Alert logic 2538, shown in Figure 29, may run at any desired interval. The alert logic 2538 may include instructions that when executed by the processor 2502, read the alert rules 2536 (2902) and energy data from the energy database 2514 (2904). The instructions may further processes the alert rules 2536 to determine based on any of the energy data whether any of the alert rules 2536 should fire (2906). If so, the alert logic 2538 determines the analysis result (2908) based on the alert rule and displays the analysis result (2910). In that regard, the machine 2500 may output a message, display any desired indicia, or take any other pre-defined action when the alert rule fires, as defined in each alert rule 2536. Further, the alert rules 2536 may specify the analysis result (e.g., display a warning message), the analysis results may be pre-determined (e.g., for any rule that fires, send a message to an operator), or the analysis results may be determined in other ways. The alert rules 2536 may vary widely in implementation, and may take into consideration any of the variables obtained from the building or any other source, such as kWh consumption, temperature, time, date, balance points, or other variables. Examples of alert rules 2536 are shown below in Table: Alerts.

| Table: Alerts | | | |
|---|---|---|---|
| Alert Category | Alert Name | Alert Rule | Notes |
| Demand kilowatts(kw) | 1. Demand Exceeded Peak Threshold | Building kw demand compared at any desired interval against a user defined kw threshold. | Example: If kw demand reaches over 500kw, then issue alert. |
| | 2. Demand Exceeded Historic Threshold (not normalized) | Building kw demand continuously or at any desired interval (e.g., daily, monthly) compared against historical demand for the building. | Example: Daily kw demand is compared to the same day in previous years. Issue alert if demand is greater or less than historical demand by a pre-selected threshold. |
| | | Analysis Result: Send warning message to building operator. | |
| | 3. Demand Exceeded Baseline Threshold (normalized) | Building kw demand is continuously or at any desired interval (e.g., daily, monthly) compared against historical baseline regression model | Example: Daily kw demand is compared to the same or a similar day (as defined by any desired regression on variables such as HDD, CDD, Humidity, Occupancy, or other variables). |
| | 4. Significant Change (Increase or Decrease) in Demand | Building kw demand is monitored continuously or at any desired interval for changes up or down that exceed a pre-defined threshold. | Example: Demand goes from 700kw at 10am to 500kw 10:15 (the next interval). This could either be a result of a demand / response event or some problem with equipment or behavior changes. |
| | 5. Demand Exceeded Comparable Building Threshold | Building kw demand is continuously or at any desired interval compared against a user-defined comparable/similar building. | Example: Building 1 demand exceeds Building 7 kw demand (Building 7 is the baseline or control building against which other buildings are compared). |
| Consumption (kwh) | 1. Consumption Exceeded Historic Threshold (not normalized) | Building kwh consumption at any desired interval (e.g., hourly, daily, monthly) compared against historical consumption for the buildinq. | Example: Daily kwh consumption is compared to the same day in previous years. Issue alert if consumption is greater or less than historical consumption by a pre-selected threshold. |
| | 2. Consumption Exceeded Baseline Threshold (normalized) | Building kwh consumption is compared at any desired interval (e.g., daily, monthly) against historical baseline regression model | Example: Daily kwh consumption is compared to the same or a similar day (as defined by regression variables such as HDD, CDD, Humidity, Occupancy, or other variables). |
| | 3. Significant Change (Increase or Decrease) in Consumption | Building kwh consumption is monitored at any desired interval for changes up or down that exceed a pre-defined threshold. | Example: Consumption goes from 900kwh between 10 am and 11 am to 500kwh between 11 am and 12 noon. This could either be a result of a demand / response event or some problem with equipment or behavior changes. |
| | 4. Consumption Exceeded Comparable Building Threshold | Building kwh consumption is compared at any desired interval against a user-defined comparable/similar building. | Example: Building 1 consumption exceeds Building 7 kwh consumption (Building 7 is the baseline or control building against which other buildings are compared). |

The alerts discussed above are building level alerts with regard to consumption and demand. However, the alert rules may define alerts based on any energy consumption parameters that are directly measured, statistically derived, or otherwise obtained. The machine 2500 may also implement more complex analyses. As one example, the machine 2500 may include event logic 2542 that analyzes equipment data to detect or infer events of interest based on event rules 2540. Such event rules 2540 may help define when demand / response events occur, when equipment has failed or has been fixed, or other events. When the event logic 2542 identifies an event, the event logic 2542 may responsively execute a pre-defined action, for example as specified in the event rules 2540.

The machine 2500 or any of the systems described above may be implemented with additional, different, or fewer components. As one example, a processor may be implemented as a microprocessor, a microcontroller, a DSP, an application specific integrated circuit (ASIC), discrete logic, or a combination of other types of circuits or logic. As another example, memories may be DRAM, SRAM, Flash or any other type of memory. The processing capability of the system may be distributed among multiple components, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms.

Logic, such as programs or circuitry, m ay be combined or split among multiple programs, distributed across several memories and processors, and may be implemented in a library, such as a shared library (e.g., a dynamic link library (DLL)). The DLL, for example, may store code that analyzes energy expenditure or that prepares energy reports. As another example, the DLL may itself provide all or some of the functionality of the machine 2500. The programs may be stored on a computer readable medium, such as a CDROM, hard drive, floppy disk, flash memory, or other computer readable medium. Thus, a computer program product may include computer readable instructions, which when loaded and run in a computer and/or computer network system, cause the computer system and/or the computer network system to perform operations according to any of the claims below, and in particular to perform any of the logic and methods illustrated in Figures 26, 28, and 29, as examples.

While various embodiments of the invention have been described, it will be apparent to those of ordinary skill in the art that many more embodiments and implementations are possible within the scope of the invention as claimed.

## Claims

1. A computer implemented method for energy analysis comprising:
storing energy data comprising temperature and energy consumption data in an energy database (2514) for analysis by a processor (2502);
performing an energy analysis on the energy data to produce an analysis result, where performing the energy analysis comprises:
determining a balance point set from the energy data as the analysis result, the balance point set comprising a heating balance point (2530) and a cooling balance point (2532), wherein the heating balance point (2530) is a temperature above which a building is not heated and the cooling balance point (2532) is a temperature below which the building is not cooled,
wherein determining the balance point set comprises:
- determining a heating balance point search window into the energy data and a cooling balance point search window into the energy data, the heating balance point search window and the cooling balance point search window having respective lower ends and upper ends in degrees F or C; and
- executing a correlation analysis between the temperature and the energy consumption within the heating balance point search window and a correlation analysis between the temperature and the energy consumption within the cooling balance point search window; and generating and displaying a user interface on a display (2506), the user interface including the analysis result.

2. The computer implemented method of claim 1, where executing the correlation analysis comprises:
executing a correlation analysis between temperature and energy consumption to find a best fit correlation.

3. The computer implemented method of claim 1 or 2, where executing the correlation analysis comprises:
executing the correlation analysis at each step of a pre-selected temperature delta through either or both of the heating balance point search window and the cooling balance point search window.

4. The computer implemented method for energy analysis according to claim 1 further comprising:
determining control building data within the energy data;
determining user-defined data within the energy data;
determining, as the analysis result, an exception rank by comparing the control building data and the user-defined data, the exception rank identifying specific data in the user defined data for further review; and
generating and displaying a user interface on a display (2506), the user interface including the analysis result.

5. The computer implemented method of claim 4, where determining an exception rank comprises:
determining a control average and a control standard deviation of the energy data within a time interval in the control building data and preferably determining a user-defined average of the energy data within the time interval in the user-defined data; and/or
accessing an exception rank definition that comprises a mapping of a statistical parameter to exception ranks; and assigning the exception rank to the time interval according to the mapping, where the statistical parameter preferably comprises a standard deviation window with respect to the control average.

6. An energy analysis system comprising:
a processor (2502);
an energy database (2514) storing energy data for analysis by a processor (2502), the energy data comprising temperature and energy consumption data; and
a memory (2504) coupled to the processor (2502), the memory (2504) comprising: energy analysis logic that, when executed by the processor (2502), causes an energy analysis system to:
perform an energy analysis on the energy data to produce an analysis result, where the energy analysis comprises:
determine a balance point set from the energy data as the analysis result, the balance point set comprising a heating balance point (2530) and a cooling balance point (2532), wherein the heating balance point (2530) is a temperature above which a building is not heated and the cooling balance point (2532) is a temperature below which the building is not cooled;
wherein determining the balance point set comprises:
- determining a heating balance point search window into the energy data and a cooling balance point search window into the energy data, the heating balance point search window and the cooling balance point search window having respective lower ends and upper ends in degrees F or C; and
- executing a correlation analysis between the temperature and the energy consumption within the heating balance point search window and a correlation analysis between the temperature and the energy consumption within the cooling balance point search window; and generate and display a user interface on a display (2506), the user interface including the analysis result.

7. The system of claim 6, where the energy analysis logic further causes the energy analysis system to: execute a correlation analysis between temperature and energy consumption to find a best fit correlation.

8. The system of claim 6 or 7, where the energy analysis logic further causes the energy analysis system to: execute the correlation analysis at each step of a pre-selected temperature delta through either or both of the heating balance point search window and the cooling balance search point window.

9. An energy analysis system according to claim 6, wherein the energy analysis logic further causes an energy analysis system to:
determine control building data within the energy data;
determine user-defined data within the energy data;
determine, as the analysis result, an exception rank by comparing the control building data and the user-defined data, the exception rank identifying specific data in the user defined data for further review; and
generate and display a user interface on a display (2506), the user interface including the analysis result.

10. The system of claim 9, where the energy analysis logic further causes the energy analysis system to:
determine a control average and a control standard deviation of the energy data within a time interval in the control building data and preferably determine a user-defined average of the energy data within the time interval in the user-defined data; and/or
access an exception rank definition that comprises a mapping of a statistical parameter to exception ranks; and assign an exception rank to the time interval according to the mapping, where the statistical parameter preferably comprises a standard deviation window with respect to the control average.

11. A computer program product including computer readable instructions, which when loaded and run in a computer and/or computer network system, cause the computer system and/or the computer network system to perform operations according to any of claims or 1 - 5.

## Patentansprüche

1. Ein computerimplementiertes Verfahren zur Energieanalyse, das Folgendes umfasst:
Speichern von Energiedaten mit Temperatur- und Energieverbrauchsdaten in einer Energiedatenbank (2514) zur Analyse durch einen Prozessor (2502);
Durchführen einer Energieanalyse der Energiedaten, um ein Analyseergebnis zu erzeugen, wobei das Durchführen der Energieanalyse Folgendes umfasst:
Bestimmen eines Gleichgewichtspunkt-Satzes (*balance point set*) aus den Energiedaten als Analyseergebnis, wobei der Gleichgewichtspunkt-Satz einen Heizungs-Gleichgewichtspunkt (2530) und einen Kühlungs-Gleichgewichtspunkt (2532) umfasst, wobei der Heizungs-Gleichgewichtspunkt (2530) eine Temperatur ist, oberhalb derer ein Gebäude nicht geheizt wird, und wobei der Kühlungs-Gleichgewichtspunkt (2532) eine Temperatur ist, unter der das Gebäude nicht gekühlt wird,
wobei das Bestimmen des Gleichgewichtspunkt-Satzes Folgendes umfasst:
- Bestimmen eines Heizungs-Gleichgewichtspunkt-Suchfensters in die Energiedaten und eines Kühlungs-Gleichgewichtspunkt-Suchfensters in die Energiedaten, wobei das Heizungs-Gleichgewichtspunkt-Suchfensters und das Kühlungs-Gleichgewichtspunkt-Suchfensters jeweils untere und obere Enden in Grad F oder C aufweisen; und
- Durchführen einer Korrelationsanalyse zwischen der Temperatur und dem Energieverbrauch innerhalb des Heizungs-Gleichgewichtspunkt-Suchfensters und einer Korrelationsanalyse zwischen der Temperatur und dem Energieverbrauch innerhalb des Kühlungs-Gleichgewichtspunkt-Suchfensters; und
Erzeugen und Anzeigen einer Benutzerschnittstelle auf einem Display (2506), wobei die Benutzerschnittstelle das Analyseergebnis enthält.

2. Das computerimplementierte Verfahren nach Anspruch 1, wobei das Durchführen der Korrelationsanalyse Folgendes umfasst:
Durchführen einer Korrelationsanalyse zwischen Temperatur und Energieverbrauch, um eine Best-Fit-Korrelation zu finden.

3. Das computerimplementierte Verfahren nach Anspruch 1 oder 2, wobei das Durchführen der Korrelationsanalyse Folgendes umfasst:
Durchführen der Korrelationsanalyse bei jedem Schritt eines vorgewählten Temperaturdeltas durch eines oder durch beide des Heizungs-Gleichgewichtspunkt-Suchfensters und des Kühlungs-Gleichgewichtspunkt-Suchfensters.

4. Das computerimplementierte Verfahren zur Energieanalyse nach Anspruch 1, das ferner Folgendes umfasst:
Bestimmen von Regelgebäude-Daten (*control building data*) innerhalb der Energiedaten;
Bestimmen von benutzerdefinierten Daten innerhalb der Energiedaten;
Bestimmen, als Analyseergebnis, eines Ausnahme-Rangs durch Vergleichen der Regelgebäude-Daten und der benutzerdefinierten Daten, wobei der Ausnahme-Rang bestimmte Daten in den benutzerdefinierten Daten zur weiteren Prüfung identifiziert; und
Erzeugen und Anzeigen einer Benutzerschnittstelle auf einem Display (2506), wobei die Benutzerschnittstelle das Analyseergebnis enthält.

5. Das computerimplementierte Verfahren nach Anspruch 4, wobei das Bestimmen eines Ausnahme-Rangs Folgendes umfasst:
Bestimmen eines Regelmittelwertes und einer Regelstandardabweichung der Energiedaten innerhalb eines Zeitintervalls in den Regelgebäude-Daten und vorzugsweise Bestimmen eines benutzerdefinierten Durchschnitts der Energiedaten innerhalb des Zeitintervalls in den benutzerdefinierten Daten und/oder
Zugreifen auf eine Ausnahme-Rang-Definition, die ein Mapping eines statistischen Parameters auf Ausnahme-Ränge umfasst; und Zuordnen des Ausnahme-Rangs zum Zeitintervall gemäß dem Mapping, wobei der statistische Parameter vorzugsweise ein Standardabweichungsfenster in Bezug auf den Regelmittelwert umfasst.

6. Ein Energieanalysesystem, das Folgendes umfasst:
einen Prozessor (2502);
eine Energiedatenbank (2514), die Energiedaten zur Analyse durch einen Prozessor (2502) speichert, wobei die Energiedaten Temperatur- und Energieverbrauchsdaten umfassen; und
einen Speicher (2504), der mit dem Prozessor (2502) gekoppelt ist, wobei der Speicher (2504) Folgendes umfasst: Energieanalyselogik, die bei Ausführung durch den Prozessor (2502) ein Energieanalysesystem zu Folgendem veranlasst:
Durchführen einer Energieanalyse der Energiedaten, um ein Analyseergebnis zu erzeugen, wobei die Energieanalyse Folgendes umfasst:
Bestimmen eines Gleichgewichtspunkt-Satzes (*balance point set*) aus den Energiedaten als Analyseergebnis, wobei der Gleichgewichtspunkt-Satz einen Heizungs-Gleichgewichtspunkt (2530) und einen Kühlungs-Gleichgewichtspunkt (2532) umfasst, wobei der Heizungs-Gleichgewichtspunkt (2530) eine Temperatur ist, oberhalb derer ein Gebäude nicht geheizt wird, und wobei der Kühlungs-Gleichgewichtspunkt (2532) eine Temperatur ist, unter der das Gebäude nicht gekühlt wird,
wobei das Bestimmen des Gleichgewichtspunkt-Satzes Folgendes umfasst:
- Bestimmen eines Heizungs-Gleichgewichtspunkt-Suchfensters in die Energiedaten und eines Kühlungs-Gleichgewichtspunkt-Suchfensters in die Energiedaten, wobei das Heizungs-Gleichgewichtspunkt-Suchfensters und das Kühlungs-Gleichgewichtspunkt-Suchfensters jeweils untere und obere Enden in Grad F oder C aufweisen; und
- Durchführen einer Korrelationsanalyse zwischen der Temperatur und dem Energieverbrauch innerhalb des Heizungs-Gleichgewichtspunkt-Suchfensters und einer Korrelationsanalyse zwischen der Temperatur und dem Energieverbrauch innerhalb des Kühlungs-Gleichgewichtspunkt-Suchfensters; und
Erzeugen und Anzeigen einer Benutzerschnittstelle auf einem Display (2506), wobei die Benutzerschnittstelle das Analyseergebnis enthält.

7. Das System nach Anspruch 6, wobei die Energieanalyse-Logik ferner das Energieanalyse-System zu Folgendem veranlasst: Durchführen einer Korrelationsanalyse zwischen Temperatur und Energieverbrauch, um eine Best-Fit-Korrelation zu finden.

8. Das System nach Anspruch 6 oder 7, wobei die Energieanalyse-Logik ferner das Energieanalyse-System zu Folgendem veranlasst: Durchführen der Korrelationsanalyse bei jedem Schritt eines vorgewählten Temperaturdeltas durch eines oder durch beide des Heizungs-Gleichgewichtspunkt-Suchfensters und des Kühlungs-Gleichgewichtspunkt-Suchfensters.

9. Ein Energieanalysesystem nach Anspruch 6, wobei die Energieanalyse-Logik ferner das Energieanalyse-System zu Folgendem veranlasst:
Bestimmen von Regelgebäude-Daten innerhalb der Energiedaten;
Bestimmen von benutzerdefinierten Daten innerhalb der Energiedaten;
Bestimmen, als Analyseergebnis, eines Ausnahme-Rangs durch Vergleichen der Regelgebäude-Daten und der benutzerdefinierten Daten, wobei der Ausnahme-Rang bestimmte Daten in den benutzerdefinierten Daten zur weiteren Prüfung identifiziert; und
Erzeugen und Anzeigen einer Benutzerschnittstelle auf einem Display (2506), wobei die Benutzerschnittstelle das Analyseergebnis enthält.

10. Das System nach Anspruch 9, wobei die Energieanalyse-Logik ferner das Energieanalyse-System zu Folgendem veranlasst:
Bestimmen eines Regelmittelwertes und einer Regelstandardabweichung der Energiedaten innerhalb eines Zeitintervalls in den Regelgebäude-Daten und vorzugsweise Bestimmen eines benutzerdefinierten Durchschnitts der Energiedaten innerhalb des Zeitintervalls in den benutzerdefinierten Daten und/oder
Zugreifen auf eine Ausnahme-Rang-Definition, die ein Mapping eines statistischen Parameters auf Ausnahme-Ränge umfasst; und Zuordnen eines Ausnahme-Rangs zum Zeitintervall gemäß dem Mapping, wobei der statistische Parameter vorzugsweise ein Standardabweichungsfenster in Bezug auf den Regelmittelwert umfasst.

11. Ein Computerprogrammprodukt, das computerlesbaren Anweisungen enthält, die, wenn sie in ein Computer- und/oder Computernetzwerksystem geladen und dort ausgeführt werden, das Computersystem und/oder das Computernetzwerksystem veranlassen, Operationen nach irgendeinem der Ansprüche 1 - 5 durchzuführen.

## Revendications

1. Un procédé mis en oeuvre par ordinateur pour l'analyse énergétique comprenant le fait de :
stocker des données énergétiques comprenant des données de température et de consommation d'énergie dans une base de données d'énergie (2514) pour une analyse par un processeur (2502) ;
exécuter une analyse énergétique sur les données énergétiques pour produire un résultat d'analyse, sachant que l'exécution de l'analyse énergétique comprend le fait de :
déterminer un ensemble de points d'équilibre à partir des données d'énergie comme résultat de l'analyse, l'ensemble de points d'équilibre comprenant un point d'équilibre de chauffage (2530) et un point d'équilibre de refroidissement (2532), sachant que le point d'équilibre de chauffage (2530) est une température au-dessus de laquelle un bâtiment n'est pas chauffé et le point d'équilibre de refroidissement (2532) est une température au-dessous de laquelle le bâtiment n'est pas refroidi,
sachant que la détermination de l'ensemble de points d'équilibre comprend le fait de :
- déterminer une fenêtre de recherche de point d'équilibre de chauffage dans les données énergétiques et une fenêtre de recherche de point d'équilibre de refroidissement dans les données énergétiques, la fenêtre de recherche de point d'équilibre de chauffage et la fenêtre de recherche de point d'équilibre de refroidissement ayant des extrémités inférieures et supérieures respectives en degrés F ou C ; et de
- exécuter une analyse de corrélation entre la température et la consommation d'énergie dans la fenêtre de recherche de point d'équilibre de chauffage et une analyse de corrélation entre la température et la consommation d'énergie dans la fenêtre de recherche de point d'équilibre de refroidissement ; et
générer et afficher une interface utilisateur sur un afficheur (2506), l'interface utilisateur incluant le résultat de l'analyse.

2. Le procédé mis en oeuvre par ordinateur d'après la revendication 1, sachant que l'exécution de l'analyse de corrélation comprend le fait de :
exécuter une analyse de corrélation entre la température et la consommation d'énergie pour trouver la corrélation déterminée au mieux (*best fit correlation*).

3. Le procédé mis en oeuvre par ordinateur d'après la revendication 1 ou 2, sachant que l'exécution de l'analyse de corrélation comprend le fait de :
exécuter une analyse de corrélation à chaque étape d'un delta de température présélectionné à travers l'une ou les deux parmi la fenêtre de recherche de point d'équilibre de chauffage et la fenêtre de recherche de point d'équilibre de refroidissement.

4. Le procédé mis en oeuvre par ordinateur pour l'analyse énergétique d'après la revendication 1, comprenant en outre le fait de :
déterminer des données de bâtiment de contrôle dans les données énergétiques ;
déterminer des données définies par l'utilisateur dans les données énergétiques ;
déterminer, comme résultat de l'analyse, un rang d'exception en comparant les données de bâtiment de contrôle avec les données définies par l'utilisateur, le rang d'exception identifiant des données spécifiques dans les données définies par l'utilisateur pour un examen plus approfondi ; et
générer et afficher une interface utilisateur sur un afficheur (2506), l'interface utilisateur incluant le résultat de l'analyse.

5. Le procédé mis en oeuvre par ordinateur d'après la revendication 4, sachant que le fait de déterminer un rang d'exception comprend le fait de :
déterminer une moyenne de contrôle et d'un écart-type de contrôle des données énergétiques dans un intervalle de temps dans les données de bâtiment de contrôle et, de préférence, déterminer une moyenne définie par l'utilisateur des données énergétiques dans l'intervalle de temps des données définies par l'utilisateur ; et/ou de
accéder à une définition de rang d'exception qui comprend un mappage d'un paramètre statistique aux rangs d'exception ; et affecter le rang d'exception à l'intervalle de temps selon le mappage, sachant que le paramètre statistique comprend de préférence une fenêtre d'écart-type par rapport à la moyenne de contrôle.

6. Un système d'analyse énergétique comprenant :
un processeur (2502) ;
une base de données d'énergie (2514) stockant des données énergétiques pour analyse par un processeur (2502), les données énergétiques comprenant des données sur la température et la consommation d'énergie ; et
une mémoire (2504) couplée au processeur (2502), la mémoire (2504) comprenant : une logique d'analyse énergétique qui, lorsqu'elle est exécutée par le processeur (2502), amène un système d'analyse énergétique à :
exécuter une analyse énergétique sur les données énergétiques pour produire un résultat d'analyse, sachant que l'analyse énergétique comprend le fait de :
déterminer un ensemble de points d'équilibre à partir des données d'énergie comme résultat de l'analyse, l'ensemble de points d'équilibre comprenant un point d'équilibre de chauffage (2530) et un point d'équilibre de refroidissement (2532), sachant que le point d'équilibre de chauffage (2530) est une température au-dessus de laquelle un bâtiment n'est pas chauffé et le point d'équilibre de refroidissement (2532) est une température au-dessous de laquelle le bâtiment n'est pas refroidi,
sachant que la détermination de l'ensemble de points d'équilibre comprend le fait de :
- déterminer une fenêtre de recherche de point d'équilibre de chauffage dans les données énergétiques et une fenêtre de recherche de point d'équilibre de refroidissement dans les données énergétiques, la fenêtre de recherche de point d'équilibre de chauffage et la fenêtre de recherche de point d'équilibre de refroidissement ayant des extrémités inférieures et supérieures respectives en degrés F ou C ; et de
- exécuter une analyse de corrélation entre la température et la consommation d'énergie dans la fenêtre de recherche de point d'équilibre de chauffage et une analyse de corrélation entre la température et la consommation d'énergie dans la fenêtre de recherche de point d'équilibre de refroidissement ; et
générer et afficher une interface utilisateur sur un afficheur (2506), l'interface utilisateur incluant le résultat de l'analyse.

7. Le système d'après la revendication 6, sachant que la logique d'analyse énergétique amène le système d'analyse énergétique en outre à :
exécuter une analyse de corrélation entre la température et la consommation d'énergie pour trouver la corrélation la mieux adaptée.

8. Le système d'après la revendication 6 ou 7, sachant que la logique d'analyse énergétique amène le système d'analyse énergétique en outre à :
exécuter une analyse de corrélation à chaque étape d'un delta de température présélectionné à travers l'une ou les deux parmi la fenêtre de recherche de point d'équilibre de chauffage et la fenêtre de recherche de point d'équilibre de refroidissement.

9. Un système d'analyse énergétique d'après la revendication 6, sachant que la logique d'analyse énergétique amène un système d'analyse énergétique en outre à :
déterminer des données de bâtiment de contrôle dans les données énergétiques ;
déterminer des données définies par l'utilisateur dans les données énergétiques ;
déterminer, comme résultat de l'analyse, un rang d'exception en comparant les données de bâtiment de contrôle avec les données définies par l'utilisateur, le rang d'exception identifiant des données spécifiques dans les données définies par l'utilisateur pour un examen plus approfondi ; et
générer et afficher une interface utilisateur sur un afficheur (2506), l'interface utilisateur incluant le résultat de l'analyse.

10. Le système d'après la revendication 9, sachant que la logique d'analyse énergétique amène le système d'analyse énergétique en outre à :
déterminer une moyenne de contrôle et d'un écart-type de contrôle des données énergétiques dans un intervalle de temps dans les données de bâtiment de contrôle et, de préférence, déterminer une moyenne définie par l'utilisateur des données énergétiques dans l'intervalle de temps des données définies par l'utilisateur ; et/ou de
accéder à une définition de rang d'exception qui comprend un mappage d'un paramètre statistique aux rangs d'exception ; et affecter un rang d'exception à l'intervalle de temps selon le mappage, sachant que le paramètre statistique comprend de préférence une fenêtre d'écart-type par rapport à la moyenne de contrôle.

11. Un produit de programme informatique, incluant des instructions lisibles par ordinateur, qui, lorsqu'elles sont chargées et exécutées dans un système informatique et/ou un système de réseau informatique, amènent le système informatique et/ou le système de réseau informatique à effectuer des opérations conformément à l'une quelconque des revendications de 1 - 5.
